# EUROPEAN PATENT APPLICATION

(11) **EP 4 826 842 A1**
(43) Date of publication of application: **21.10.2026**
(21) Application number: 24941156.2
(22) Date of filing: 31.05.2024
(51) Int. Cl.: H01M 10/613

(54) **HEAT EXCHANGE MEMBER, CASE, BATTERY, AND ELECTRIC DEVICE**

(71) Applicant: Contemporary Amperex Technology Co., Limited, Ningde, Fujian 352100 (CN)
(72) Inventor: SONG, Feiting, Ningde, Fujian 352100 (CN); WU, Qiaoyun, Ningde, Fujian 352100 (CN); LIU, Hongbiao, Ningde, Fujian 352100 (CN)
(74) Representative: Lorenz Seidler Gossel Part. mbB
(86) International application number: PCT/CN2024/096781
(87) International publication number: WO 2025/245866

(57) **Abstract**

A heat exchange member, a case, a battery, and an electric device. The heat exchange member (20) is used for a case (100) for a battery (1000), and comprises: a heat exchange plate (21); a back plate (22) provided on one side of the heat exchange plate (21) in a first direction (Z) and connected to the heat exchange plate (21), the first direction (Z) being the thickness direction of the heat exchange plate (21); and heat exchange tubes (23) provided between the heat exchange plate (21) and the back plate (22) and fixedly connected to the heat exchange plate (21) and/or the back plate (22).

## Description

### TECHNICAL FIELD

This application relates to the field of battery technologies, in particular to a heat exchange member, a box, a battery, and an electric device.

### BACKGROUND

In the prior art, to ensure normal operation and service life of a battery, a heat exchange member is usually arranged inside the battery. The heat exchange member can exchange heat with battery cells to regulate the temperature of each battery cell, thereby ensuring the service life of the battery. However, in related art, a heat exchange member arranged on an outer side of a box has poor thermal conductivity with a battery assembly. In addition, a stamped heat exchange member has large weight, large pressure drop, and non-uniform flow distribution.

### SUMMARY

This application is intended to solve at least one of the technical problems existing in the prior art. In view of this, this application is intended to propose a heat exchange member, as well as a box, a battery, and an electric device that include the heat exchange member. The heat exchange member has a large thermal conductivity coefficient and a good thermal conduction effect. Compared with a stamped flow channel plate, the heat exchange tube has uniform flow, small pressure drop, and light weight, which can increase the energy density of the battery.

According to a first aspect, an embodiment of this application provides a heat exchange member for a box of a battery. The heat exchange member includes a heat exchange plate; a back plate, where the back plate is arranged on a side of the heat exchange plate in a first direction and connected to the heat exchange plate, and the first direction is a thickness direction of the heat exchange plate; and a heat exchange tube, where the heat exchange tube is arranged between the heat exchange plate and the back plate and fixedly connected to the heat exchange plate and/or the back plate.

In the above technical solution, the heat exchange member is directly used for the box of the battery and includes the heat exchange plate, the heat exchange tube, and the back plate arranged sequentially from inside to outside, so that the heat exchange member can replace a part of the box, reduce the number of parts of the battery, and reduce the cost. In addition, the heat exchange tube is connected to the heat exchange plate, achieving a large thermal conductivity coefficient and a good thermal conduction effect, thereby improving the heat exchange efficiency between the heat exchange member and a battery cell. Moreover, the heat exchange member includes the heat exchange tube. Compared with a stamped flow channel plate, the heat exchange tube has uniform flow, small pressure drop, and light weight, which can increase the energy density of the battery.

In some embodiments, a side surface of the heat exchange plate facing away from the heat exchange tube is provided with an anti-overflow groove, and a bottom wall and/or side wall of the anti-overflow groove is suitable for being adhered to a plurality of battery cells.

In the above technical solution, since a side surface of the heat exchange plate is provided with the anti-overflow groove, the anti-overflow groove can effectively reduce the possibility of adhesive overflow during adhesion of the battery cell and the heat exchange plate.

In some embodiments, the anti-overflow groove is formed by recessing a part of the heat exchange plate toward the back plate along the first direction.

In the above technical solution, since the anti-overflow groove is formed by recessing a part of the heat exchange plate, a processing process of the anti-overflow groove can be simplified, the processing difficulty can be reduced, a thickness of the heat exchange plate can be reduced, the cost can be reduced, the structural rigidity of the heat exchange plate can be increased, and the overall strength of the heat exchange member can be enhanced.

In some embodiments, a periphery of the heat exchange plate is provided with a flange extending outward away from a center of the heat exchange plate, and the flange extends annularly along a circumferential direction of the anti-overflow groove.

In the above technical solution, since the periphery of the heat exchange plate is provided with the annular flange, the flange can facilitate a sealing fit between the heat exchange member and a first part of the box, and facilitate positioning and assembly of a sealing gasket arranged between the heat exchange member and the first part of the box, thereby improving the sealing performance of the box.

In some embodiments, a depth of the anti-overflow groove is greater than or equal to 7 mm, and/or a width of the flange is greater than or equal to 10 mm.

In the above technical solution, the depth of the anti-overflow groove being greater than or equal to 7 mm can not only reduce the possibility of adhesive overflow during adhesion of the battery cell and the heat exchange plate, but also reduce the processing difficulty of the heat exchange plate, and improve the finished product quality of the heat exchange plate. The width of the flange being greater than or equal to 10 mm can increase a connection area between the heat exchange member and the first part of the box and improve the connection reliability and sealing performance between the heat exchange member and the first part.

In some embodiments, one of the back plate and the heat exchange plate is provided with a reinforcing rib protruding toward the heat exchange tube, and the reinforcing rib is fixedly connected to the other of the back plate and the heat exchange plate.

In the above technical solution, by arranging the reinforcing rib on the back plate or the heat exchange plate and connecting the other of the heat exchange plate and the back plate through the reinforcing rib, the structural strength of the back plate or the heat exchange plate can be enhanced, the integrity among the back plate, the heat exchange plate, and the heat exchange tube can be enhanced, and the overall structural strength of the heat exchange member can be further enhanced.

In some embodiments, the reinforcing rib is provided in plurality; the plurality of reinforcing ribs extend along a second direction and are spaced apart in a third direction; at least a part of the heat exchange tube is arranged between two adjacent reinforcing ribs; and the first direction, the second direction, and the third direction intersect with each other.

In the above technical solution, by arranging the plurality of reinforcing ribs, the structural strength of the back plate can be enhanced by the reinforcing ribs, the overall structural strength of the heat exchange member can be enhanced. In addition, accommodating the heat exchange tube in an avoidance groove defined between adjacent reinforcing ribs can reduce a thickness of the heat exchange member in the first direction, prevent interference between the reinforcing ribs and the heat exchange tube, achieve more compact structural layout of the heat exchange member, reduce space occupation, and allow the plurality of reinforcing ribs to protect the heat exchange tube.

In some embodiments, the heat exchange tube includes a plurality of straight tube segments, the plurality of straight tube segments extend along the second direction and are spaced apart in the third direction, and the plurality of straight tube segments and the plurality of reinforcing ribs are alternately arranged in the third direction.

In the above technical solution, alternately arranging the plurality of straight tube segments and the plurality of reinforcing ribs in the third direction can further simplify the structure of the heat exchange tube, simplify the structure of the back plate, achieve compact structures, facilitate the processing and forming of the back plate and the heat exchange tube, and protect the heat exchange tube by using the plurality of reinforcing ribs.

In some embodiments, the periphery of the heat exchange plate is fixedly connected to a periphery of the back plate.

In the above technical solution, fixedly connecting the periphery of the heat exchange plate to the periphery of the back plate can further enhance the integrity among the heat exchange plate, the back plate, and the heat exchange tube, further enhance the structural strength of the heat exchange member, and also reduce the possibility of entrance of external impurities between the back plate and the heat exchange plate, thereby reducing the problem that the external impurities affect the heat exchange efficiency of the heat exchange tube.

In some embodiments, the heat exchange tube is provided in plurality, the plurality of heat exchange tubes are spaced apart along the third direction, and the third direction intersects with the first direction.

In the above technical solution, the heat exchange member is configured to include a plurality of heat exchange tubes, which can not only reduce the process complexity of the heat exchange member and increase the production rate of the heat exchange member, but also reduce a fluid pressure drop in a single heat exchange tube, thereby improving the heat exchange efficiency, and improving the uniformity of temperature.

In some embodiments, the heat exchange tube includes a plurality of straight tube segments and at least one bent segment; the plurality of straight tube segments all extend along the second direction and are spaced apart in the third direction; the plurality of straight tube segments are sequentially connected through the bent segment; and the first direction, the second direction, and the third direction intersect with each other.

In the above technical solution, since the heat exchange tube includes a plurality of straight tube segments and at least one bent segment, the structure of the heat exchange tube can be simplified, the processing and manufacturing costs of the heat exchange tube can be reduced, and the heat exchange efficiency of the heat exchange tube can be improved.

In some embodiments, the heat exchange tube is welded or adhered to the heat exchange plate, and the heat exchange plate is welded to the back plate.

In the above technical solution, the heat exchange tube is welded or adhered to the heat exchange plate, and the heat exchange plate is welded to the back plate, which can not only simplify connection structures among the heat exchange tube, the heat exchange plate, and the back plate and improve the assembly efficiency of the heat exchange member, but also enhance the connection strength among the heat exchange tube, the heat exchange plate, and the back plate and enhance the structural strength of the heat exchange member.

In some embodiments, the heat exchange member further includes: a manifold, the manifold has a flow collecting chamber and a flow distributing chamber, an inlet of the heat exchange tube is in communication with the flow distributing chamber, and an outlet is in communication with the flow collecting chamber.

In the above technical solution, by arranging the manifold, the flow collecting chamber and the flow distributing chamber of the manifold are respectively in communication with the outlet and the inlet of the heat exchange tube, so that liquid input and liquid output of the heat exchange member can be realized through the manifold, thereby achieving a compact overall structure of the heat exchange member.

In some embodiments, the flow collecting chamber and the flow distributing chamber are arranged along the thickness direction of the heat exchange plate, an inlet end of the heat exchange tube is bent toward one side in the thickness direction of the heat exchange plate and then connected to the manifold, and an outlet end of the heat exchange tube is bent toward the other side in the thickness direction of the heat exchange plate and then connected to the manifold.

In the above technical solution, the flow collecting chamber and the flow distributing chamber of the manifold are spaced apart along the first direction, which can facilitate alignment of the flow collecting chamber and the flow distributing chamber with the inlet ends and outlet ends of the plurality of heat exchange tubes in the second direction, and facilitate direct connection of the plurality of heat exchange tubes to the flow distributing chamber and the flow collecting chamber. Since the inlet end and the outlet end of the heat exchange tube are respectively bent toward the two sides in the first direction and then connected to the manifold, the inlet end and the outlet end of the heat exchange tube can be smoothly connected to the flow distributing chamber and the flow collecting chamber of the manifold in an insertion manner, realizing optimization and compactness of the connection structure between the heat exchange tube and the manifold.

In some embodiments, the manifold is further provided with a heat insulation chamber, and the heat insulation chamber is arranged between the flow distributing chamber and the flow collecting chamber.

In the above technical solution, by forming the heat insulation chamber in the manifold, the flow collecting chamber and the flow distributing chamber can be isolated by the heat insulation chamber, so that fluid in the flow collecting chamber and the flow distributing chamber is thermally insulated by air in the heat insulation chamber, thereby improving the heat exchange performance of the heat exchange member.

In some embodiments, the manifold includes a manifold body and a partition plate. The manifold body is tubular. The partition plate is arranged in the manifold body and extends along a length direction of the manifold body to partition the manifold body into the flow distributing chamber and the flow collecting chamber, where the heat insulation chamber is formed in the partition plate; or, the partition plate is provided in plurality, the plurality of partition plates are spaced apart along the thickness direction of the heat exchange plate, and the heat insulation chamber is defined between two adjacent partition plates.

In the above technical solution, the manifold includes the manifold body and the partition plate, the partition plate is used for partitioning to form the flow distributing chamber and the flow collecting chamber, and the heat insulation chamber is formed on the partition plate; or the partition plate is further used for partitioning to form the heat insulation chamber between the flow distributing chamber and the flow collecting chamber, which can simplify the structure of the manifold and facilitate the processing and manufacturing of the manifold on the premise of improving the heat insulation performance between the flow distributing chamber and the flow collecting chamber.

In some embodiments, the heat exchange member further includes: a liquid inlet joint and a liquid outlet joint; the manifold is provided with a liquid inlet port in communication with the flow distributing chamber and a liquid outlet port in communication with the flow collecting chamber; both the liquid inlet port and the liquid outlet port are formed on a side of the manifold facing away from the heat exchange tube; the liquid inlet joint is connected to a position of the liquid inlet port; and the liquid outlet joint is connected to a position of the liquid outlet port.

In the above technical solution, both the liquid inlet joint and the liquid outlet joint are connected to the side of the manifold facing away from the heat exchange tube, which can facilitate connection of external liquid inlet pipelines and external liquid outlet pipelines on a same side of the manifold, and regulate the routing of external pipelines, thereby achieving a compact structure.

In some embodiments, at least one of the liquid inlet joint and the liquid outlet joint is welded to the manifold through a welding gasket.

In the above technical solution, the use of the welding gasket for welding the manifold to the liquid inlet joint and the liquid outlet joint can facilitate welding of the manifold to the liquid inlet joint and the liquid outlet joint and improve the welding quality.

In some embodiments, the heat exchange member further includes: a bracket, and the bracket is arranged on a side of the back plate facing away from the heat exchange tube and fixedly connected to the back plate.

In the above technical solution, by arranging the bracket on the side of the back plate facing away from the heat exchange tube, the bracket can not only enhance the structural strength of the back plate and the overall strength of the heat exchange member, but also serve as a connection structure between the box and an external structure, thereby facilitating fixed connection between the box and the external structure, and facilitating fixation of the battery.

In some embodiments, there is at least one bracket; and when the bracket is provided in plurality, the plurality of brackets extend along the third direction and are spaced apart in the second direction, and the first direction, the second direction, and the third direction intersect with each other.

In the above technical solution, by arranging the plurality of brackets and making the plurality of brackets extend along the third direction and be spaced apart in the second direction, the structural strength of the heat exchange member can be further enhanced, and fixed connection of the battery to an external structure can be further facilitated.

In some embodiments, the bracket is in a plate shape, and a reinforcing convex rib is formed on the bracket.

In the above technical solution, by arranging the reinforcing convex rib on the bracket, the structural strength of the bracket can be enhanced, and thus the overall structural strength of the heat exchange member can be further enhanced.

In some embodiments, a plurality of reinforcing convex ribs are formed on the bracket, and the plurality of reinforcing convex ribs extend along the third direction and are spaced apart in the second direction.

In the above technical solution, by arranging the plurality of reinforcing convex ribs extending along the third direction on the bracket, the structural strength of the bracket can be enhanced by the reinforcing convex ribs, thereby enhancing the structural strength of the heat exchange member along the third direction, and improving the reliability of the heat exchange member.

In some embodiments, the back plate is provided with a first positioning portion, the bracket is provided with a second positioning portion, and the first positioning portion and the second positioning portion are in positioning fit.

In the above technical solution, by respectively arranging the first positioning portion and the second positioning portion on the back plate and the bracket, the bracket can be positioned on the back plate through the first positioning portion and the second positioning portion, thereby facilitating subsequent fixed connection between the back plate and the bracket, and improving the assembly efficiency.

In some embodiments, one of the first positioning portion and the second positioning portion is provided with a positioning boss and the other is provided with a positioning groove, and the positioning boss fits with the interior of the positioning groove.

In the above technical solution, forming the first positioning portion and the second positioning portion as a positioning boss and a positioning groove respectively can simplify a positioning structure for the back plate and the bracket, facilitate the processing and manufacturing, and reduce the production difficulty.

In some embodiments, two side edges of the back plate in the third direction are provided with outwardly protruding lugs, the first positioning portion is formed on the lug, the bracket extends along the third direction, and the second positioning portions are formed at two ends of the bracket in the third direction.

In the above technical solution, the two side edges of the back plate in the third direction are provided with the outwardly protruding lugs, and the first positioning portion is formed on the lug. In this way, the first positioning portion may be arranged on a peripheral side of the heat exchange plate and the heat exchange tube, so that the first positioning portion does not interfere with a connection structure for the heat exchange tube or back plate and the heat exchange plate. In addition, the bracket can also play a role in structurally strengthening the lug, and the lug and two ends of the bracket can jointly constitute a connection structure between the box and an external structure, facilitating fixation of the battery.

According to a second aspect, an embodiment of this application provides a box. The box includes a first part, where the first part is provided with an accommodating cavity open on one side; and a second part, where the second part covers the open side of the accommodating cavity, and the second part is the heat exchange member according to the first aspect of this application.

In the above technical solution, since the second part of the box is the above heat exchange member, and the heat exchange member includes the heat exchange plate, the heat exchange tube, and the back plate arranged sequentially from inside to outside, the heat exchange member can replace a part of the box, reduce the number of parts of the battery, and reduce the cost. In addition, the structure of the heat exchange member in which the heat exchange tube is connected to the heat exchange plate has a large thermal conductivity coefficient and a good thermal conduction effect, which can improve the heat exchange efficiency between the heat exchange member and the battery cell. Moreover, the heat exchange member includes the heat exchange tube. Compared with a stamped flow channel plate, the heat exchange tube has uniform flow, small pressure drop, and light weight, which can increase the energy density of the battery.

According to a third aspect, an embodiment of this application provides a battery, and the battery includes the box according to the second aspect of this application.

In the above technical solution, since the battery is provided with the above box, and the second part of the box is the heat exchange member, the heat exchange efficiency between the heat exchange member and the battery cell can be improved, and compared with a stamped flow channel plate, the heat exchange tube has uniform flow, small pressure drop, and light weight, which can increase the energy density of the battery.

According to a fourth aspect, an embodiment of this application provides an electric device, including the battery according to the third aspect of this application.

In the above technical solution, since the electric device is provided with the above battery, the overall performance of the electric device is improved.

Additional aspects and advantages of this application are given in part in the following description, part of which become apparent from the following description or can be learned through practice of this application.

### BRIEF DESCRIPTION OF DRAWINGS

FIG. 1 is a schematic diagram of a vehicle according to an embodiment of this application;
FIG. 2 is an exploded view of a battery according to an embodiment of this application;
FIG. 3 is an exploded view of a battery from another perspective according to an embodiment of this application;
FIG. 4 is a schematic diagram of a heat exchange member according to an embodiment of this application;
FIG. 5 is an exploded view of a heat exchange member according to an embodiment of this application;
FIG. 6 is a schematic diagram of a back plate, a heat exchange tube, and a manifold of a heat exchange member according to an embodiment of this application;
FIG. 7 is a schematic diagram of a heat exchange tube and a manifold of a heat exchange member according to an embodiment of this application;
FIG. 8 is an enlarged view of a circled portion A in FIG. 7;
FIG. 9 is a cross-sectional view of a manifold of a heat exchange member according to an embodiment of this application;
FIG. 10 is a schematic diagram of a heat exchange tube and a manifold of a heat exchange member from another perspective according to an embodiment of this application;
FIG. 11 is an enlarged view of a circled portion B in FIG. 10;
FIG. 12 is a schematic diagram of a heat exchange tube and a manifold of a heat exchange member from still another perspective according to an embodiment of this application;
FIG. 13 is a schematic diagram of a back plate of a heat exchange member according to an embodiment of this application; and
FIG. 14 is a schematic diagram of a bracket of a heat exchange member according to an embodiment of this application.

### Reference signs:

1. electric device;
1000. battery; 2000. controller; 3000. motor;
100. box; 10. first part; 101. accommodating cavity;
20. heat exchange member; 21. heat exchange plate; 211. anti-overflow groove; 212. flange;
22. back plate; 221. reinforcing rib; 222. first positioning portion; 223. lug;
23. heat exchange tube; 231. straight tube segment; 232. bent segment; 24. manifold;
2401. flow collecting chamber; 2402. flow distributing chamber; 2403. liquid inlet port; 2404. liquid outlet port; 2405. heat insulation chamber;
241. manifold body; 242. end cover; 243. partition plate;
25. liquid inlet joint; 26. liquid outlet joint; 27. bracket; 271. reinforcing convex rib;
272. second positioning portion; 2721. positioning groove; 2722. first protrusion; 2723. second protrusion;
28. welding gasket; and 300. battery cell.

### DESCRIPTION OF EMBODIMENTS

The embodiments of the technical solution of this application are described in detail below in conjunction with the accompanying drawings. The following embodiments are only used to more clearly illustrate the technical solution of this application, and are therefore only used as examples and cannot be used to limit the protection scope of this application.

Unless otherwise defined, all technical and scientific terms used herein have the same meaning as commonly understood by those skilled in the technical field of this application; the terms used herein are only for the purpose of describing specific embodiments and are not intended to limit this application; and the terms "include", "comprise", "have", and any variations thereof in the specification and claims of this application and the above description of the drawings are intended to cover non-exclusive inclusion.

In the description of the embodiments of this application, the technical terms "first", "second", and the like are only used to distinguish different objects and cannot be understood as indicating or implying relative importance or implicitly indicating the number, specific order, or primary-secondary relationship of the indicated technical features. In the description of the embodiments of this application, "a plurality of" means two or more, unless otherwise clearly and specifically defined.

The reference to "embodiment" herein means that a specific feature, structure, or characteristic described in conjunction with this embodiment may be included in at least one embodiment of this application. The appearance of the phrase in various positions in the specification does not necessarily refer to the same embodiment, nor is it an independent or alternative embodiment that is mutually exclusive with other embodiments. It is explicitly and implicitly understood by those skilled in the art that the embodiments described herein can be combined with other embodiments.

In the description of the embodiments of this application, the term "and/or" is only a description of an association relationship of associated objects, indicating that three relationships may exist. For example, A and/or B may indicate the following three cases: only A exists, both A and B exist, and only B exists. In addition, the character "/" herein generally indicates that the contextually associated objects are in an "or" relationship.

In the description of the embodiments of this application, the term "a plurality of" means two or more (including two).

In the description of the embodiments of this application, orientation or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "axial", "radial", "circumferential", and the like are based on the orientation or positional relationships shown in the drawings, and are only for the convenience of describing the embodiments of this application and simplifying the description, and do not indicate or imply that the referred apparatus or element must have a specific orientation or be constructed and operated in a specific orientation, and therefore cannot be understood as a limitation on the embodiments of this application.

In the description of the embodiments of this application, unless otherwise clearly specified and limited, the technical terms "installation", "connection", "join", "fixation", and the like should be understood in a broad sense. For example, it may be a fixed connection, a detachable connection, or an integral connection; it may be a mechanical connection or an electrical connection; it may be a direct connection or an indirect connection through an intermediate medium; and it may be an internal communication between two elements or an interaction relationship between two elements. For those of ordinary skill in the art, the specific meanings of the above terms in the embodiments of this application can be understood according to specific circumstances.

At present, from the perspective of market development, the use of traction batteries is becoming more and more extensive. Traction batteries are not only used in energy storage power systems such as hydropower, thermal power, wind power, and solar power stations, but also widely used in electric transportation tools such as electric bicycles, electric motorcycles, and electric vehicles, as well as in various fields such as military equipment and aerospace. With the continuous expansion of the application field of traction batteries, the market demand is also continuously increasing.

It can be understood that the temperature environment inside a battery is affected by external weather conditions, and battery cells inside the battery need to be within a specific temperature range during operation. When the temperature inside the battery exceeds or falls below this range, the stability and performance of the battery are greatly affected. For example, in hot weather, the battery cells need to be cooled to dissipate heat inside the battery, so as to keep the temperature inside the battery within a required temperature range. In cold weather, the battery cells need to be heated inside the battery to keep the temperature inside the battery still within the required temperature range.

In related art, a battery is usually provided with a heat exchange structure to dissipate heat and cool battery cells as well as heat the battery cells. However, a heat exchange member using a heat exchange tube is arranged on an outer side of the box. The heat exchange tube is connected to the box through an adhesive. During transfer of heat in the heat exchange tube, the heat is first transferred to an adhesive layer, then to the box, and then to the battery cells through the box. In this process, a small thermal conductivity coefficient and poor heat transfer of the adhesive layer lead to poor thermal management performance of the heat exchange member. In addition, a heat exchange member in the related art may alternatively be a stamped part, that is, a flow channel is formed by stamping on a plate body. However, for a stamped plate, during the flow of a fluid along the flow channel, there are many branches on the stamped plate, and the channels of the branches have different lengths, which leads to different flow resistances of the flow channels of the branches and non-uniform flow distribution of a plurality of branches. Moreover, after the plurality of branches converge, a cross section of the flow channel becomes narrower, resulting in a concentrative increase in pressure drop.

Based on the above considerations, to improve the thermal management performance of a heat exchange member, reduce pressure drop in a heat exchange flow channel, and achieve uniform flow distribution in the flow channel, this application proposes a heat exchange member. The heat exchange member is used for a box of a battery and includes a heat exchange plate, a back plate, and a heat exchange tube. The back plate is arranged on a side of the heat exchange plate in a first direction and is connected to the heat exchange plate. The first direction is a thickness direction of the heat exchange plate. The heat exchange tube is arranged between the heat exchange plate and the back plate and is fixedly connected to the heat exchange plate and/or the back plate. Thus, the heat exchange member can replace a part of the box, reduce the number of parts of the battery, and reduce the cost. In addition, the heat exchange tube directly exchanges heat with a battery cell through the heat exchange plate, achieving a large thermal conductivity coefficient and a good thermal conduction effect, thereby improving the heat exchange efficiency between the heat exchange member and the battery cell. Moreover, the heat exchange member includes the heat exchange tube. Compared with a stamped flow channel plate, the heat exchange tube has uniform flow, small pressure drop, and light weight, which can increase the energy density of the battery.

The heat exchange member disclosed in this application can be used in an electric device that uses a battery as a power source or in various energy storage systems that use a battery as an energy storage element. The electric device may be, but is not limited to, mobile phones, tablets, laptop computers, electric toys, electric tools, electric bicycles, electric vehicles, ships, and spacecraft. Electric toys may include fixed or mobile electric toys, such as game consoles, electric toy cars, electric toy ships, electric toy airplanes, and the like. Spacecraft may include airplanes, rockets, space shuttles, spacecraft, and the like.

In the following embodiments, for ease of description, the electric device 1 being a vehicle is used as an example to introduce in detail the structures of the electric device 1, battery 1000, box 100, and heat exchange member 20 of this application.

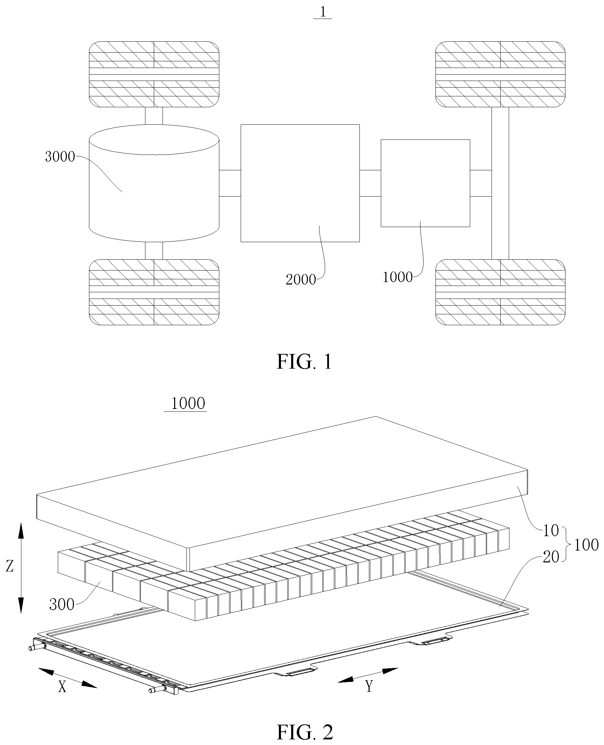

Reference is made to FIG. 1. FIG. 1 is a schematic structural diagram of an electric device 1 which is a vehicle according to some embodiments of this application. The vehicle may be a fuel vehicle, a gas vehicle, or a new energy vehicle. The new energy vehicle may be a battery electric vehicle, a hybrid vehicle, an extended-range vehicle, or the like. The vehicle is provided with a battery 1000, and the battery 1000 may be arranged at the bottom, front, or rear of the vehicle. The battery 1000 may be used to supply power to the vehicle. For example, the battery 1000 may be used as an operating power source for the vehicle. The vehicle may further include a controller 2000 and a motor 3000. The controller 2000 is used to control the battery 1000 to supply power to the motor 3000, for example, to meet the operating power demands for starting, navigation, and driving of the vehicle.

In some embodiments of this application, the battery 1000 can be used not only as an operating power source for the vehicle, but also as a driving power source for the vehicle, replacing or partially replacing fuel or natural gas to provide driving power for the vehicle.

In some embodiments of this application, the battery 1000 can be used not only as an operating power source for the vehicle, but also as a driving power source for the vehicle, replacing or partially replacing fuel or natural gas to provide driving power for the vehicle.

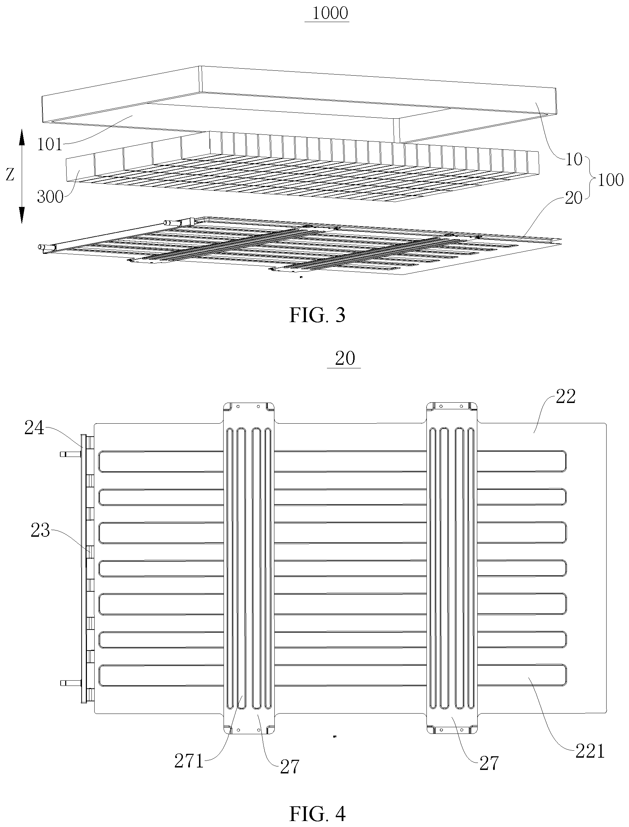

Reference is made to FIG. 2 and FIG. 3. FIG. 2 is an exploded view of a battery 1000 according to some embodiments of this application, and FIG. 3 is an exploded view of a battery 1000 from another perspective according to an embodiment of this application. The battery 1000 includes a box 100 and a battery cell 300. The box 100 has an accommodating cavity 101, and the battery cell 300 is accommodated in the accommodating cavity 101 of the box 100.

The box 100 is used to provide an accommodating space for the battery cell 300, and the box 100 can adopt various structures. In some embodiments, the box 100 may include a first part 10 and a second part. The first part 10 and the second part cover each other, and the first part 10 and the second part jointly define an accommodating space for accommodating the battery cell 300. The second part may be a hollow structure with one end open, the first part 10 may be a plate-shaped structure, and the first part 10 covers an open side of the second part so that the first part 10 and the second part jointly define the accommodating space. Alternatively, the first part 10 and the second part may each be a hollow structure with one side open, and the open side of the first part 10 covers the open side of the second part. Certainly, the box 100 formed by the first part 10 and the second part may have various shapes, such as a cylindrical shape and a rectangular shape.

In some embodiments, the box 100 further includes a bottom guard plate, where the bottom guard plate is arranged on a lower side of the box to further enhance the bearing strength and impact resistance of a bottom of the box. The bottom plate may be made of various materials, including but not limited to: copper, iron, aluminum, stainless steel, and aluminum alloy.

In the battery 1000, the battery cell 300 may be provided in plurality. The plurality of battery cells 300 may be connected in series, in parallel, or in series-parallel. Being connected in series-parallel means that there are both a series connection and a parallel connection between the plurality of battery cells 300. The plurality of battery cells 300 may be directly connected in series, in parallel, or in series-parallel, and then an entirety formed by the plurality of battery cells 300 is accommodated in the box 100. Certainly, the battery 1000 may alternatively be formed in a manner that a plurality of battery cells 300 are first connected in series, in parallel, or in series-parallel to form a battery 1000 module, and then a plurality of battery 1000 modules are connected in series, in parallel, or in series-parallel to form an entirety that is accommodated in the box 100. The battery 1000 may further include other structures. For example, the battery 1000 may further include a busbar component for realizing electrical connection between the plurality of battery cells 300.

Each battery cell 300 may be a secondary battery 1000 or a primary battery 1000, and it may alternatively be a lithium-sulfur battery 1000, a sodium-ion battery 1000, or a magnesium-ion battery 1000, but is not limited thereto. The battery cell 300 may be in a cylindrical shape, a flat shape, a rectangular shape, or other shapes.

In the battery 1000 of some embodiments of this application, the first part 10 of the box 100 is a hollow structure with one end open, the second part is a plate-shaped structure, and the second part is the heat exchange member 20 of the embodiment of the first aspect of this application. The heat exchange member 20 formed as the second part of the box 100 provides a heat exchange function for the plurality of battery cells 300. In some embodiments, the heat exchange member 20 may include a heat exchange tube 23 and a manifold 24, where the heat exchange tube 23 is connected to the manifold 24. The heat exchange tube 23 may be a flat tube, a round tube, a harmonica tube, or a tube of other shapes. The manifold 24 may be a rectangular tube, a round tube, or the like.

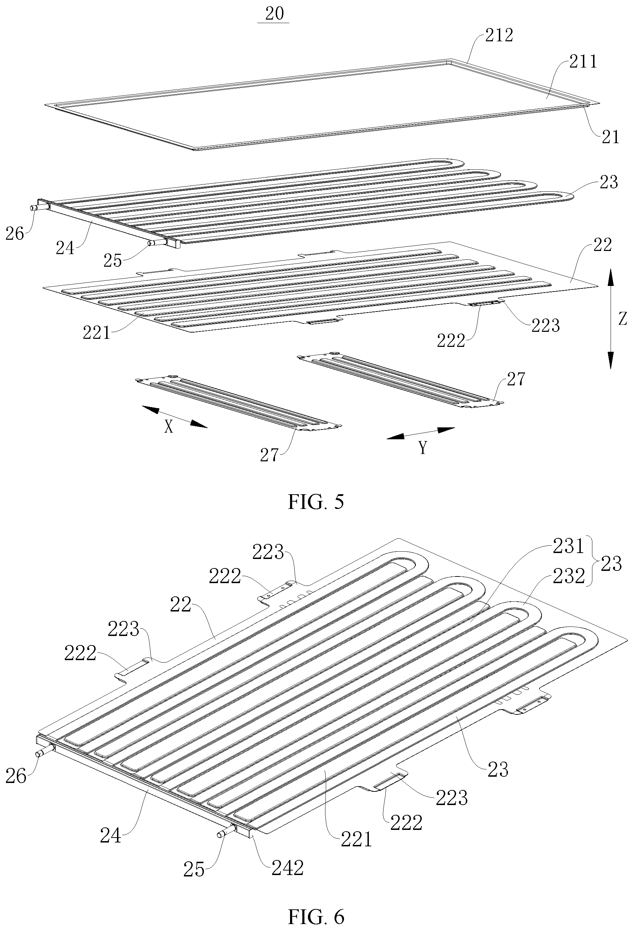

The heat exchange member 20 according to the embodiment of the first aspect of this application is described below with reference to FIG. 4 to FIG. 13. FIG. 4 is a schematic diagram of the heat exchange member 20 according to this embodiment of this application, and FIG. 5 is an exploded view of the heat exchange member 20 according to this embodiment of this application.

An embodiment of this application provides a heat exchange member 20. As shown in FIG. 4 and FIG. 5, the heat exchange member 20 is used for a box 100 of a battery 1000. The heat exchange member 20 includes: a heat exchange plate 21, a back plate 22, and a heat exchange tube 23. The back plate 22 is arranged on a side of the heat exchange plate 21 in a first direction Z and is connected to the heat exchange plate 21. The first direction Z is a thickness direction of the heat exchange plate 21. The heat exchange tube 23 is arranged between the heat exchange plate 21 and the back plate 22 and is fixedly connected to the heat exchange plate 21 and/or the back plate 22.

The heat exchange member 20 is used for the box 100 of the battery 1000, that is, the heat exchange member 20 is formed as a part of the box 100. For example, the box 100 includes a first part 10 and a second part. The first part 10 may be formed as an empty box structure with an open top. The heat exchange member 20 is formed as the second part and covers an upper opening of the first part 10. Alternatively, the first part 10 is formed as an empty box structure with an open bottom. The heat exchange member 20 is formed as the second part and covers a bottom opening of the first part 10. In this way, the heat exchange member 20 replaces a part of the box 100, which can reduce the number of parts of the battery 1000, reduce the overall weight of the battery 1000, reduce the cost, and increase the energy density of the battery 1000.

The heat exchange plate 21 and the back plate 22 of the heat exchange member 20 are sequentially arranged in the first direction Z. The heat exchange tube 23 is sandwiched between the heat exchange plate 21 and the back plate 22. The heat exchange tube 23 may be fixedly connected to only the heat exchange plate 21, the heat exchange tube 23 may alternatively be fixedly connected to only the back plate 22, and the heat exchange tube 23 may alternatively be fixedly connected to both the heat exchange plate 21 and the back plate 22.

The heat exchange plate 21 is used to be arranged on a side of the heat exchange tube 23 facing an accommodating cavity 101 of the box 100, that is, a side surface of the heat exchange plate 21 facing away from the heat exchange tube 23 is a heat exchange surface in contact with and exchanging heat with the battery cell 300. The heat exchange tube 23 is arranged between the heat exchange plate 21 and the back plate 22, and the heat exchange tube 23 is connected to the heat exchange plate 21. In this way, the heat exchange tube 23 may directly exchange heat with the battery cell 300 through the heat exchange plate 21. Since both the heat exchange tube 23 and the heat exchange plate 21 are metal parts with a large thermal conductivity and a good heat transfer effect, a thermal management effect of the heat exchange member 20 on the plurality of battery cells 300 can be improved.

Since the heat exchange member 20 includes the heat exchange tube 23, a heat exchange flow channel is defined in the heat exchange tube 23. As compared with a stamped plate, a heat exchange fluid of this application has a smaller pressure drop when flowing in the heat exchange tube 23, and more uniform flow distribution is achieved. In addition, by sandwiching the heat exchange tube 23 between the heat exchange plate 21 and the back plate 22 and arranging the back plate 22 on the outer side, the back plate 22 can protect the heat exchange tube 23, reducing the possibility of an impact caused by an external object to the heat exchange tube 23, thereby prolonging the service life of the heat exchange tube 23. Furthermore, since the heat exchange member 20 is a three-layer structure including the heat exchange plate 21, the heat exchange tube 23, and the back plate 22, the overall structural strength of the heat exchange member 20 is higher, and thus the overall structural strength of the box 100 can be enhanced.

In the above technical solution, since the heat exchange member 20 is directly used for the box 100 of the battery 1000 and includes the heat exchange plate 21, the heat exchange tube 23, and the back plate 22 arranged sequentially from inside to outside, the heat exchange member 20 can replace a part of the box 100, reduce the number of parts of the battery 1000, and reduce the cost. In addition, the heat exchange tube 23 is connected to the heat exchange plate 21, achieving a large thermal conductivity coefficient and a good thermal conduction effect, thereby improving the heat exchange efficiency between the heat exchange member 20 and the battery cell 300. Moreover, the heat exchange member 20 includes the heat exchange tube 23. Compared with a stamped flow channel plate, the heat exchange tube 23 has uniform flow, small pressure drop, and light weight, which can increase the energy density of the battery 1000.

A specific structure of the heat exchange plate 21 of the heat exchange member 20 according to the embodiment of the first aspect of this application is described below with reference to FIG. 5.

In some embodiments of this application, referring to FIG. 5, a side surface of the heat exchange plate 21 facing away from the heat exchange tube 23 is provided with an anti-overflow groove 211, and a bottom wall and/or side wall of the anti-overflow groove 211 is suitable for being adhered to a plurality of battery cells 300.

The side surface of the heat exchange plate 21 facing away from the heat exchange tube 23 is a surface of the heat exchange plate 21 that constitutes an inner wall of the accommodating cavity 101. The anti-overflow groove 211 on the heat exchange plate 21 may be formed by stamping, may be formed by grooving on the heat exchange plate 21, or may be formed by arranging an anti-overflow rib on a surface of the heat exchange plate 21. The anti-overflow rib extends annularly along a circumferential direction of the heat exchange plate 21, and the anti-overflow rib encloses the anti-overflow groove 211.

When a plurality of battery cells 300 are loaded into the box 100, they may be loaded into the anti-overflow groove 211 of the heat exchange plate 21. The heat exchange plate 21 is adhered to the plurality of battery cells 300. When the heat exchange plate 21 is adhered to the plurality of battery cells 300, the plurality of battery cells 300 may be adhered to only a bottom wall of the anti-overflow groove 211, may be adhered to only a side wall of the anti-overflow groove 211, or may be adhered to both the bottom wall and the side wall of the anti-overflow groove 211. The heat exchange plate 21 and the plurality of battery cells 300 may be adhered through a thermally conductive structural adhesive. Thus, the thermally conductive structural adhesive can not only realize the fixation of the plurality of battery cells 300 and the heat exchange plate 21, but also play a role in heat conduction.

By providing the anti-overflow groove 211, the plurality of battery cells 300 are arranged in the anti-overflow groove 211. When a thermally conductive structural adhesive is used for adhesion, the anti-overflow groove 211 can accommodate the thermally conductive structural adhesive therein to avoid adhesive overflow.

In the above technical solution, since a side surface of the heat exchange plate 21 is provided with the anti-overflow groove 211, the anti-overflow groove 211 can effectively reduce the possibility of adhesive overflow when the battery cells 300 are adhered to the heat exchange plate 21.

In some embodiments of this application, referring to FIG. 5, the anti-overflow groove 211 is formed by recessing a part of the heat exchange plate 21 toward the back plate 22.

The heat exchange plate 21 may be an aluminum plate. The aluminum plate has a large thermal conductivity and a good thermal conduction effect, which can improve the heat exchange efficiency between the heat exchange member 20 and the battery cell 300. In addition, when the heat exchange plate 21 is an aluminum plate and the heat exchange tube 23 is an aluminum tube, welding of the heat exchange plate 21 and the heat exchange tube 23 can be facilitated, improving the assembly efficiency and thermal conduction effect.

The heat exchange plate 21 may alternatively be a stainless steel plate. The stainless steel plate has a large thermal conductivity, a good thermal conduction effect, and high strength. This can not only improve the heat exchange efficiency between the heat exchange member 20 and the battery cell 300, but also enhance the structural strength of the heat exchange member 20.

For example, the anti-overflow groove 211 is formed by stamping on the heat exchange plate 21. Stamping refers to a processing and forming method in which pressure is applied to plates, strips, tubes, profiles, and the like by a press and a die to make the plates, strips, tubes, profiles, and the like undergo plastic deformation or separation so as to obtain a workpiece (a stamped part) with a desired shape and size. Forming the anti-overflow groove 211 by stamping on the heat exchange plate 21 can, on the one hand, simplify a processing process of the anti-overflow groove 211 and reduce the processing difficulty, and on the other hand, can also reduce a thickness of the heat exchange plate 21 and reduce the cost. In addition, forming the anti-overflow groove 211 by stamping can also enhance the structural strength of the heat exchange plate 21, and enhance the overall strength of the heat exchange member 20.

In the above technical solution, since the anti-overflow groove 211 is formed by recessing a part of the heat exchange plate 21 toward the back plate 22, the processing process of the anti-overflow groove 211 can be simplified, the processing difficulty can be reduced, the thickness of the heat exchange plate 21 can be reduced, the cost can be reduced, the structural rigidity of the heat exchange plate 21 can be increased, and the overall strength of the heat exchange member 20 can be enhanced.

In some embodiments of this application, referring to FIG. 5, a periphery of the heat exchange plate 21 is provided with a flange 212 extending outward away from a center of the heat exchange plate 21, and the flange 212 extends annularly along a circumferential direction of the anti-overflow groove 211.

The heat exchange plate 21 may be a rectangular plate. The heat exchange plate 21 is provided with the anti-overflow groove 211 by stamping. The anti-overflow groove 211 is a rectangular groove. After the anti-overflow groove 211 is formed by stamping, a part of the periphery of the heat exchange plate 21 that is not stamped is formed as the flange 212, and the flange 212 is in a rectangular ring shape.

When the heat exchange member 20 is connected to the first part 10 of the box 100 as the second part of the box 100, the flange 212 may fit with the first part 10 to realize a sealed connection between the first part 10 and the second part.

Specifically, the first part 10 has an accommodating cavity 101 open on one side in the first direction Z. The heat exchange member 20, as the second part, covers the open side of the first part 10. Further, a sealing gasket may be arranged between the flange 212 and the first part 10. The sealing gasket extends annularly along a circumferential direction of the heat exchange member 20. The sealing gasket hermetically abuts against the flange 212 and the first part 10 at a position therebetween. Thus, the flange 212 can provide assembly space for assembly of the sealing gasket. The sealing gasket can seal a gap between the flange 212 and the first part 10, thereby improving the overall sealing performance of the box 100.

More further, at least one of the first part 10 and the flange 212 may be provided with a sealing groove. In the first direction Z, one end of the sealing gasket may be arranged in the sealing groove, and the other end of the sealing gasket may abut against the other of the first part 10 and the flange 212. Thus, the sealing gasket can be positioned and fixed by the sealing groove, so that deviation of the sealing gasket is avoided, thereby improving the sealing performance of the sealing gasket.

In addition, the flange 212 may be provided with a first fastening hole. The first fastening hole may be provided in plurality. The plurality of first fastening holes are spaced apart along a circumferential direction of the flange 212. The first part 10 is provided with a plurality of second fastening holes. The plurality of second fastening holes are spaced apart along the circumferential direction of the flange 212. The plurality of first fastening holes and the plurality of second fastening holes are in one-to-one correspondence and are aligned in the first direction Z. A fastening connector sequentially passes through the second fastening holes and the first fastening holes to realize the fastening between the heat exchange member 20 and the first part 10.

Further, the flange 212 and the side wall of the anti-overflow groove 211 may be in circular arc connection with each other, which can reduce stress concentration at a connection position between the flange 212 and the side wall of the anti-overflow groove 211 and enhance the structural strength of the heat exchange plate 21.

In the above technical solution, since the periphery of the heat exchange plate 21 is provided with the annular flange 212, the flange 212 can facilitate sealing fit between the heat exchange member 20 and the first part 10 of the box 100, and facilitate positioning and assembly of the sealing gasket arranged between the heat exchange member 20 and the first part 10 of the box 100, thereby improving the sealing performance of the box 100.

In some embodiments of this application, a depth of the anti-overflow groove 211 is greater than or equal to 7 mm, and/or a width of the flange 212 is greater than or equal to 10 mm.

In the first direction Z, the depth of the anti-overflow groove 211 may be 7 mm, 8 mm, 10 mm, 15 mm, 20 mm, 30 mm, 50 mm, or 70 mm, or the like.

Further, in the first direction Z, the depth of the anti-overflow groove 211 may be greater than or equal to 20 mm and less than or equal to 30 mm. For example, the depth of the anti-overflow groove 211 may be 21 mm, 22 mm, 23 mm, 24 mm, 25 mm, 26 mm, 27 mm, 28 mm, 29 mm, or the like. By setting the depth of the anti-overflow groove 211 between 20 mm and 30 mm, on the one hand, the depth of the anti-overflow groove 211 can be increased to effectively reduce the possibility of adhesive overflow when the battery cell 300 is adhered to the heat exchange plate 21. On the other hand, when the anti-overflow groove 211 is formed by stamping, the possibility of excessive stretch, severe deformation, excessively small wall thickness, or even fracture at a local position of the heat exchange plate 21 can be reduced, the processing difficulty can be reduced, and the finished product quality of the heat exchange plate 21 can be improved.

In a plane perpendicular to the first direction Z, for example, in the second direction Y or in the third direction X, the width of the flange 212 is greater than or equal to 10 mm. For example, the width of the flange 212 may be 10 mm, 12 mm, 14 mm, 16 mm, 18 mm, 20 mm, 25 mm, 30 mm, 35 mm, or 40 mm. It should be noted that when the heat exchange member 20 is used for the box 100 of the battery 1000, a connection structure and a sealing structure need to be arranged on the flange 212 to realize the connection and sealing between the heat exchange member 20 and the first part 10 of the box 100. Therefore, the width of the flange 212 may be set according to the connection structure and sealing structure that are to be arranged, so as to improve the connection reliability and sealing performance between the heat exchange member 20 and the first part 10.

In the above technical solution, the depth of the anti-overflow groove 211 being greater than or equal to 7 mm can not only reduce the possibility of adhesive overflow when the battery cell 300 is adhered to the heat exchange plate 21, but also reduce the processing difficulty of the heat exchange plate 21 and improve the finished product quality of the heat exchange plate 21; and the width of the flange 212 being greater than or equal to 10 mm can increase a connection area between the heat exchange member 20 and the first part 10 of the box 100 and improve the connection reliability and sealing performance between the heat exchange member 20 and the first part 10.

Specific structures of the heat exchange tube 23 and the back plate 22 of the heat exchange member 20 according to the embodiment of the first aspect of this application are described below with reference to FIG. 6. FIG. 6 is a schematic diagram of the back plate 22, the heat exchange tube 23, and the manifold 24 of the heat exchange member 20 according to this embodiment of this application.

In some embodiments of this application, one of the back plate 22 and the heat exchange plate 21 is provided with a reinforcing rib 221 protruding toward the heat exchange tube 23, and the reinforcing rib 221 is fixedly connected to the other of the back plate 22 and the heat exchange plate 21.

For example, the back plate 22 is provided with a reinforcing rib 221 protruding toward the heat exchange plate 21 along the first direction Z, and the reinforcing rib 221 is fixedly connected to the heat exchange plate 21. In these embodiments, by arranging the reinforcing rib 221 on the back plate 22, the structural strength of the back plate 22 can be increased, and the back plate 22 can be fixedly connected to the heat exchange plate 21 through the reinforcing rib 221, enhancing the integrity among the back plate 22, the heat exchange plate 21, and the heat exchange tube 23, and further improving the overall structural strength of the heat exchange member 20.

For another example, the heat exchange plate 21 is provided with a reinforcing rib 221 protruding toward the back plate 22, and the reinforcing rib 221 is fixedly connected to the back plate 22. In these embodiments, by arranging the reinforcing rib 221 on the heat exchange plate 21, the structural strength of the heat exchange plate 21 can be increased, and the heat exchange plate 21 can be fixedly connected to the back plate 22 through the reinforcing rib 221, enhancing the integrity among the back plate 22, the heat exchange plate 21, and the heat exchange tube 23, and further improving the overall structural strength of the heat exchange member 20.

For another example, the back plate 22 is provided with a first reinforcing rib 221 protruding toward the heat exchange plate 21 along the first direction Z, the first reinforcing rib 221 is fixedly connected to the heat exchange plate 21, the heat exchange plate 21 is provided with a second reinforcing rib 221 protruding toward the back plate 22, and the second reinforcing rib 221 is fixedly connected to the back plate 22.

In an example, the reinforcing rib 221 may be in an emboss shape; and the reinforcing rib 221 may alternatively extend along a specific direction to form a long strip shape, for example, the reinforcing rib 221 may extend along a straight line and/or a curve. Certainly, the reinforcing rib 221 may alternatively be annular, for example, the reinforcing rib 221 may extend to form a circular ring shape, a rectangular ring shape, or the like. This is not limited in this application, as long as it can enhance the structural strength of the heat exchange plate 21 or the back plate 22 and can realize the connection between the heat exchange plate 21 and the back plate 22. When the reinforcing rib 221 is provided in plurality, the plurality of reinforcing ribs 221 may be arranged in an array. Certainly, positions of the plurality of reinforcing ribs 221 may alternatively be specifically arranged according to requirements.

Further, the reinforcing rib 221 may be a convex rib additionally arranged on a surface of the heat exchange plate 21 or the back plate 22, thereby further enhancing the structural strength of the heat exchange plate 21 and the back plate 22. In addition, the reinforcing rib 221 may alternatively be formed by protruding of a part of a plate body of the heat exchange plate 21 or the back plate 22. For example, the reinforcing rib 221 may be formed by direct stamping on the heat exchange plate 21 or the back plate 22, thereby reducing the weight and cost.

In the above technical solution, by arranging the reinforcing rib 221 on the back plate 22 or the heat exchange plate 21 and connecting the other of the heat exchange plate 21 and the back plate 22 through the reinforcing rib 221, the structural strength of the back plate 22 or the heat exchange plate 21 can be increased, the integrity among the back plate 22, the heat exchange plate 21, and the heat exchange tube 23 can be enhanced, and the overall structural strength of the heat exchange member 20 can be further improved.

The embodiments of this application are described using an example in which the reinforcing rib 221 is arranged on the back plate 22. After reading the following technical solutions of this application, those skilled in the art can apparently understand the technical solution in which the reinforcing rib 221 is arranged on the heat exchange plate 21, and details are not repeated herein.

In some embodiments of this application, the reinforcing rib 221 is provided in plurality; the plurality of reinforcing ribs 221 extend along the second direction Y and are spaced apart in the third direction X; at least a part of the heat exchange tube 23 is arranged between two adjacent reinforcing ribs 221; and the first direction Z, the second direction Y, and the third direction X intersect with each other.

For example, the number of the reinforcing ribs 221 may be two, three, four, five, eight, ten, fifteen, twenty, or the like. The reinforcing ribs 221 may extend along a straight line or along a curve in the second direction Y. Spacings between the plurality of reinforcing ribs 221 in the third direction X may be equal or not equal, and the spacing between two adjacent reinforcing ribs 221 may be always the same or gradually change. For example, in a specific example, the plurality of reinforcing ribs 221 extend along a straight line in the second direction Y, and the plurality of reinforcing ribs 221 are evenly spaced apart in the third direction X.

In a specific example, the reinforcing ribs 221 are arranged on the back plate 22. By arranging the plurality of reinforcing ribs 221 on the back plate 22, the plurality of reinforcing ribs 221 extend along the second direction Y and are spaced apart in the third direction X, which can further enhance the structural strength of the back plate 22.

A part of the heat exchange tube 23 may be arranged between adjacent reinforcing ribs 221, and another part of the heat exchange tube 23 may be arranged on an outer side of the plurality of reinforcing ribs 221, that is, on a side of the plurality of reinforcing ribs 221 facing a periphery of the back plate 22. Alternatively, the heat exchange tube 23 may be entirely arranged between adjacent reinforcing ribs 221.

Further, two adjacent reinforcing ribs 221 fit with each other to define an avoidance groove. In some specific examples, each avoidance groove may be provided with a heat exchange tube 23 inside. In other examples, only some of the avoidance grooves may be provided with the heat exchange tubes 23 inside. When one avoidance groove is provided with the heat exchange tube 23 inside, only one heat exchange tube 23 may be arranged in the avoidance groove, or a plurality of heat exchange tubes 23 may be arranged. By arranging the heat exchange tube 23 between adjacent reinforcing ribs 221, the reinforcing ribs 221 can be used to enhance the structural strength of the back plate 22 and enhance the overall structural strength of the heat exchange member 20. In addition, the heat exchange tube 23 can be accommodated in the avoidance groove defined between adjacent reinforcing ribs 221. In this way, a thickness of the heat exchange member 20 in the first direction Z can be reduced, avoiding interference between the reinforcing ribs 221 and the heat exchange tube 23, achieving more compact structural layout of the heat exchange member 20, and reducing space occupation.

"The first direction Z, the second direction Y, and the third direction X intersect with each other" is intended to indicate that the first direction Z, the second direction Y, and the third direction X may be arranged perpendicular to each other, or may only intersect with each other rather than be arranged perpendicular to each other. For example, any two of the first direction Z, the second direction Y, and the third direction X may be arranged at an angle of 30°, 60°, 80°, 120°, 150°, or 170°. For example, as shown in FIG. 5, the first direction Z is a thickness direction of the heat exchange plate 21, the second direction Y is a length direction of the heat exchange plate 21, the third direction X is a width direction of the heat exchange plate 21, the reinforcing rib 221 extends along the length direction of the heat exchange plate 21, and the plurality of reinforcing ribs 221 are spaced apart in the width direction of the heat exchange plate 21.

In a specific example, a side surface of the heat exchange tube 23 facing the heat exchange plate 21 is flush with a side surface of the reinforcing rib 221 facing the heat exchange plate 21. In this way, the heat exchange tube 23 and the reinforcing rib 221 may simultaneously fit with the heat exchange plate 21, which not only facilitates the fixed connection between the reinforcing rib 221 and the heat exchange plate 21, but also facilitates the face-to-face fitting of the heat exchange tube 23 and the heat exchange plate 21 to achieve heat transfer. In addition, the reinforcing rib 221 can play a role in supporting the heat exchange plate 21, reducing a pressure of the heat exchange plate 21 on the heat exchange tube 23, protecting the heat exchange tube 23, and improving the reliability of the heat exchange tube 23.

In the above technical solution, by arranging the plurality of reinforcing ribs 221, the reinforcing ribs 221 can be used to enhance the structural strength of the back plate 22, and the overall structural strength of the heat exchange member 20 can be enhanced. In addition, accommodating the heat exchange tube 23 in the avoidance groove defined between adjacent reinforcing ribs 221 can reduce a thickness of the heat exchange member 20 in the first direction Z, avoid interference between the reinforcing ribs 221 and the heat exchange tube 23, achieve more compact structural layout of the heat exchange member 20, reduce space occupation, and allow the plurality of reinforcing ribs 221 to protect the heat exchange tube 23.

In some embodiments of this application, referring to FIG. 6, the heat exchange tube 23 includes a plurality of straight tube segments 231. The plurality of straight tube segments 231 extend along the second direction Y and are arranged in the third direction X. The reinforcing rib 221 is arranged between two adjacent straight tube segments 231. The plurality of straight tube segments 231 and the plurality of reinforcing ribs 221 are alternately arranged in the third direction X.

The number of the straight tube segments 231 of each heat exchange tube 23 may be two, three, four, or more. In the second direction Y, the straight tube segment 231 extends along a straight line parallel to the second direction Y. The reinforcing rib 221 is arranged between two adjacent straight tube segments 231, where there may be only one reinforcing rib 221 or a plurality of reinforcing ribs 221 arranged between two adjacent straight tube segments 231.

Further, the plurality of straight tube segments 231 and the plurality of reinforcing ribs 221 are alternately arranged in the third direction X, that is, one reinforcing rib 221 is arranged between two adjacent straight tube segments 231, and one straight tube segment 231 is arranged between two adjacent reinforcing ribs 221. In this way, the plurality of reinforcing ribs 221 spaced apart can not only achieve uniform support for the heat exchange plate 21 and protect the straight tube segments 231 of the heat exchange tube 23 arranged between the reinforcing ribs 221, but also further simplify the structure of the heat exchange tube 23, simplify the structure of the back plate 22, achieve compact structures, and facilitate the processing and forming of the back plate 22 and the heat exchange tube 23.

In the above technical solution, alternately arranging the plurality of straight tube segments 231 and the plurality of reinforcing ribs 221 in the third direction X can further simplify the structure of the heat exchange tube 23, simplify the structure of the back plate 22, achieve compact structures, facilitate the processing and forming of the back plate 22 and the heat exchange tube 23, and protect the heat exchange tube 23 by using the plurality of reinforcing ribs 221.

In some embodiments of this application, a periphery of the heat exchange plate 21 is fixedly connected to a periphery of the back plate 22.

The periphery of the heat exchange plate 21 and the periphery of the back plate 22 may be welded, adhered, snap-fitted, and/or fastened.

Further, the entire periphery of the heat exchange plate 21 may be adhered or welded to the entire periphery of the back plate 22.

Fixedly connecting the periphery of the heat exchange plate 21 to the periphery of the back plate 22 can further enhance the integrity among the heat exchange plate 21, the back plate 22, and the heat exchange tube 23, and further enhance the structural strength of the heat exchange member 20. In addition, by connecting the periphery of the heat exchange plate 21 to the periphery of the back plate 22, the heat exchange tube 23 can be encapsulated between the back plate 22 and the heat exchange plate 21, reducing the possibility of entrance of external impurities between the back plate 22 and the heat exchange plate 21, and reducing the problem that the external impurities affect the heat exchange efficiency of the heat exchange tube 23.

In a specific example, the heat exchange plate 21 is recessed toward the back plate 22 to form an anti-overflow groove 211; a flange 212 is formed on the periphery of the heat exchange plate 21; the back plate 22 is provided with a reinforcing rib 221 protruding toward the heat exchange plate 21; the reinforcing rib 221 is fixedly connected to the heat exchange plate 21, for example, the reinforcing rib 221 is welded to the heat exchange plate 21; the periphery of the back plate 22 is provided with a connecting edge protruding toward the heat exchange plate 21, and the connecting edge is attached to and adhered or welded to the flange 212.

In the above technical solution, fixedly connecting the periphery of the heat exchange plate 21 to the periphery of the back plate 22 can further enhance the integrity among the heat exchange plate 21, the back plate 22, and the heat exchange tube 23, further enhance the structural strength of the heat exchange member 20, reduce the possibility of entrance of external impurities between the back plate 22 and the heat exchange plate 21, and reduce the problem that the external impurities affect the heat exchange efficiency of the heat exchange tube 23.

In some embodiments of this application, the heat exchange tube 23 is provided in plurality, the plurality of heat exchange tubes 23 are spaced apart along the third direction X, and the third direction X intersects with the first direction Z.

For example, the number of the heat exchange tubes 23 may be one, two, three, or more. The number of the heat exchange tubes 23 may be designed according to a size of the battery 1000.

Specifically, a heat exchange flow channel is defined in the heat exchange tube 23 for circulation of a heat exchange fluid. The heat exchange tube 23 may have various shapes, for example, it may be a round tube, a flat tube, or the like. In addition, the heat exchange flow channel defined in the heat exchange tube 23 may also have various shapes, for example, being a U-shaped heat exchange flow channel or the like.

Further, the plurality of heat exchange tubes 23 are arranged in parallel. For example, inlet ends of the plurality of heat exchange tubes 23 are connected to a flow distributing chamber 2402 of the manifold 24, and outlet ends of the plurality of heat exchange tubes 23 are all connected to the flow collecting chamber 2401 of the manifold 24.

The plurality of heat exchange tubes 23 may be sequentially arranged along the third direction X. Certainly, the plurality of heat exchange tubes 23 may alternatively be arranged around each other. Further, the plurality of heat exchange tubes 23 are arranged around each other in a same plane.

In the above technical solution, the heat exchange member 20 is configured to include a plurality of heat exchange tubes 23, which can not only reduce the process complexity of the heat exchange member 20 and increase the production rate of the heat exchange member 20, but also reduce a fluid pressure drop in a single heat exchange tube 23, thereby improving the heat exchange efficiency, and improving the uniformity of temperature.

In some embodiments of this application, the heat exchange tube 23 includes a plurality of straight tube segments 231 and at least one bent segment 232. The plurality of straight tube segments 231 all extend along the second direction Y and are spaced apart in the third direction X. The plurality of straight tube segments 231 are sequentially connected through the bent segment 232. The first direction Z, the second direction Y, and the third direction X intersect with each other.

The number of the straight tube segments 231 may be two, three, four, five, or more. By arranging the plurality of straight tube segments 231, a heat exchange area of a single heat exchange tube 23 can be increased, thereby improving the heat exchange effect of a single heat exchange tube 23.

The straight tube segment 231 extends along a straight line in the second direction Y. The straight tube segment 231 extending along a straight line can simplify the structure of the heat exchange tube 23 and facilitate the processing and production of the heat exchange tube 23.

Further, sequentially connected straight tube segments 231 are connected through the bent segment 232. The bent segment 232 can change a flow direction of a fluid in the heat exchange tube 23, so that a heat exchange fluid flows along a predetermined trajectory to improve the heat exchange effect on the battery cell 300.

The bent segment 232 may be arc-shaped, that is, the bent segment 232 extends along an arc. Thus, the bent segment 232 can change the flow direction of the fluid. The arc shape can reduce the flow resistance of the fluid and reduce the pressure drop, thereby increasing the flow rate of the fluid and further improving the heat exchange efficiency of the heat exchange tube 23.

Further, the bent tube may extend along a semicircular arc. Specifically, the bent tube may extend along a semicircular arc protruding away from the straight tube segment 231 in the second direction Y. An angle between an inlet and an outlet of the bent tube is 180°, and flow directions at the outlet and inlet positions of the bent tube are opposite. In this way, two adjacent straight tube segments 231 are closer to each other, and the structure of the entire heat exchange tube 23 is more compact and reliable.

In a specific example, the heat exchange tube 23 is formed by bending a single tube. Being formed by bending a single tube means that the heat exchange tube 23 may be formed by bending a single straight tube a plurality of times through processing processes such as rolling. For example, a single straight tube may be bent at a plurality of preset positions to form a V shape, a U shape, and the like at bent positions. A bent shape of a single tube may be designed according to actual conditions.

The heat exchange tube 23 is configured to be formed by bending a single tube, the number of welding spots of the heat exchange member 20 can be reduced, thereby reducing the risk of leakage of the heat exchange member 20 and improving the use reliability of the heat exchange member 20. In addition, the operation process for formation by bending a single tube is simpler than a manufacturing process of a plate-shaped structure, thereby significantly reducing the cost of the heat exchange member 20.

In a specific example, the heat exchange tube 23 may be a flat tube or a harmonica tube. The flat tube refers to a pipe whose cross section perpendicular to an extension direction of the heat exchange tube 23 is non-circular, for example, the cross section is elliptical, rectangular, or the like; and the harmonica tube is a type of flat tubes.

Specifically, upper and lower surfaces of the flat tube are flat and have a large contact area, which can increase a heat transfer area of the heat exchange member 20, thereby improving the heat exchange effect of the heat exchange member 20. In addition, upon the same bending strength and torsional strength, the flat tube is lighter in mass. Therefore, using a flat tube as the heat exchange tube 23 can also reduce the overall weight of the heat exchange member 20, thereby increasing the energy density of the battery 1000.

Further, a heat exchange flow channel may be formed inside the flat tube, or the flat tube may be internally provided with a partition component to form a plurality of heat exchange flow channels. For example, both the flat tube and the harmonica tube may be provided with separating ribs. The separating ribs may extend along a length direction of the flat tube or harmonica tube and divide the heat exchange flow channel in the flat tube or harmonica tube into a plurality of sub-flow channels.

In the above technical solution, since the heat exchange tube 23 includes a plurality of straight tube segments 231 and at least one bent segment 232, the structure of the heat exchange tube 23 can be simplified, the processing and manufacturing costs of the heat exchange tube 23 can be reduced, and the heat exchange efficiency of the heat exchange tube 23 can be improved.

In some embodiments of this application, the heat exchange tube 23 is welded or adhered to the heat exchange plate 21, and the heat exchange plate 21 is welded to the back plate 22.

In a specific example, the heat exchange tube 23 may be an aluminum tube or a stainless steel tube, thereby improving the heat exchange performance and structural strength of the heat exchange tube 23. The heat exchange plate 21 may be an aluminum plate or a stainless steel plate, thereby enhancing the structural strength and heat exchange effect of the heat exchange plate 21. The back plate 22 may be an aluminum plate or a stainless steel plate, thereby improving the heat exchange effect and structural strength of the back plate 22.

The heat exchange tube 23 and the heat exchange plate 21 are welded, which can enhance the structural strength of a connection position between the heat exchange tube 23 and the heat exchange plate 21 and can also improve the heat conduction efficiency between the heat exchange tube 23 and the heat exchange plate 21.

The heat exchange tube 23 and the heat exchange plate 21 are adhered, which can facilitate the connection between the heat exchange tube 23 and the heat exchange plate 21 and improve the assembly connection efficiency between the heat exchange tube 23 and the heat exchange plate 21.

It should be noted that when the heat exchange plate 21 and the heat exchange tube 23 are both made of aluminum, such as 3000-series aluminum or 4000-series aluminum, the heat exchange plate 21 and the heat exchange tube 23 may be welded. When the heat exchange plate 21 and the heat exchange tube 23 are made of different materials, for example, when one of the heat exchange plate 21 and the heat exchange tube 23 is a steel part and the other is an aluminum part, due to the poor welding performance between steel and aluminum, the heat exchange plate 21 and the heat exchange tube 23 may be adhered under this condition.

The heat exchange plate 21 and the back plate 22 are welded, which can enhance the connection strength between the heat exchange plate 21 and the back plate 22 and enhance the overall structural strength of the heat exchange member 20. In addition, the heat exchange tube 23 may also transfer heat to the heat exchange plate 21 through the back plate 22, increasing a heat exchange area between the heat exchange tube 23 and the heat exchange plate 21, thereby further improving the heat exchange effect on the battery cell 300.

In the above technical solution, the heat exchange tube 23 is welded or adhered to the heat exchange plate 21, and the heat exchange plate 21 is welded to the back plate 22, which can not only simplify connection structures among the heat exchange tube 23, the heat exchange plate 21, and the back plate 22 and improve the assembly efficiency of the heat exchange member 20, but also enhance the connection strength among the heat exchange tube 23, the heat exchange plate 21, and the back plate 22 and enhance the structural strength of the heat exchange member 20.

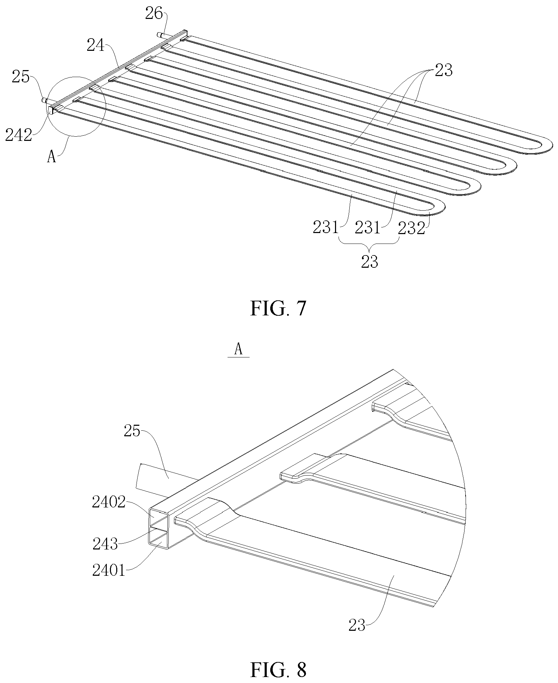

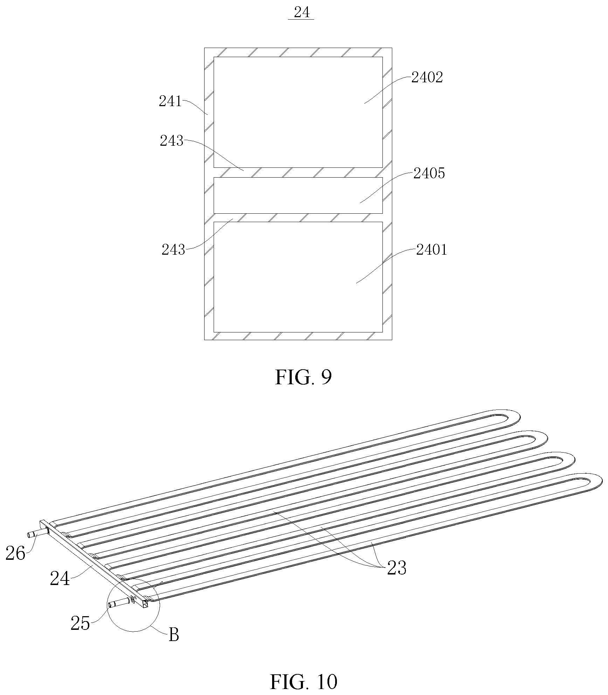

Specific structures of the manifold 24 and the heat exchange tube 23 of the heat exchange member 20 are described below with reference to FIG. 7 to FIG. 9. FIG. 7 is a schematic diagram of the heat exchange tube 23 and the manifold 24 of the heat exchange member 20 according to an embodiment of this application; FIG. 8 is an enlarged view of a circled portion A in FIG. 7; and FIG. 9 is a cross-sectional view of the manifold 24 of the heat exchange member 20 according to an embodiment of this application.

In some embodiments of this application, the heat exchange member 20 may further include: a manifold 24, the manifold 24 has a flow collecting chamber 2401 and a flow distributing chamber 2402, an inlet of the heat exchange tube 23 is in communication with the flow distributing chamber 2402, and an outlet is in communication with the flow collecting chamber 2401.

A plurality of first ports and a plurality of second ports are formed on the manifold 24. The heat exchange member 20 includes a plurality of heat exchange tubes 23. The inlets of the plurality of heat exchange tubes 23 are in one-to-one correspondence and connection with the plurality of first ports. The outlets of the plurality of heat exchange tubes 23 are in one-to-one correspondence and connection with the plurality of second ports. The flow distributing chamber 2402 of the manifold 24 is also connected to an external liquid supply pipeline, and the flow collecting chamber 2401 of the manifold 24 is connected to an external liquid outlet pipeline.

While the battery 1000 is operating, a total fluid from the external liquid supply pipeline enters the flow distributing chamber 2402 of the manifold 24, and then flows into the plurality of heat exchange tubes 23 through the plurality of first ports. After a heat exchange fluid in the heat exchange tubes 23 exchanges heat with the battery cell 300 through the heat exchange tube 23, it flows from the outlet of the heat exchange tube 23 to the second port and enters the flow collecting chamber 2401, and finally flows to the liquid outlet pipeline.

In the above technical solution, by arranging the manifold 24, the flow collecting chamber 2401 and the flow distributing chamber 2402 of the manifold 24 are respectively in communication with the outlet and the inlet of the heat exchange tube 23, so that liquid input and liquid output of the heat exchange member 20 can be realized through the manifold 24, thereby achieving a compact overall structure of the heat exchange member 20.

In some embodiments of this application, the flow collecting chamber 2401 and the flow distributing chamber 2402 are arranged along the thickness direction (first direction Z) of the heat exchange plate 21. The inlet end of the heat exchange tube 23 is bent toward one side in the thickness direction of the heat exchange plate 21 and then connected to the manifold 24. The outlet end of the heat exchange tube 23 is bent toward the other side in the thickness direction of the heat exchange plate 21 and then connected to the manifold 24.

That is, the flow collecting chamber 2401 and the flow distributing chamber 2402 are spaced apart along the first direction Z. The inlet end and the outlet end of the heat exchange tube 23 are respectively bent toward two sides in the first direction Z and then connected to the manifold 24.

It should be noted that since the flow collecting chamber 2401 and the flow distributing chamber 2402 are arranged along the first direction Z, the first port in communication with the flow distributing chamber 2402 and the second port in communication with the flow collecting chamber 2401 are not at a same height in the first direction Z. In this way, after the heat exchange tube 23 meanders and extends in a plane where the second direction Y and the third direction X are located, at least one of the inlet end and the outlet end of the heat exchange tube 23 cannot directly mate with the first port and the second port. Under this condition, when the heat exchange tube 23 extends in a plane between the first port and the second port, the inlet end and the outlet end of the heat exchange tube 23 need to be bent toward the two sides in the first direction Z respectively, to enable the inlet end of the heat exchange tube 23 to be inserted into the first port and the outlet end of the heat exchange tube 23 to be inserted into the second port, thereby realizing insertion connection with the first port and the second port of the manifold 24.

In a specific example, the heat exchange tube 23 includes an inlet end, an outlet end, and a heat exchange body connected between the inlet end and the outlet end. Specifically, either the inlet end or the outlet end includes a straight portion and a bent portion. One end of the bent portion is connected to the heat exchange body, and the other end extends obliquely toward the manifold 24 and toward a side in the first direction Z. The straight portion is connected to the other end of the bent portion facing the manifold 24 and extends along a straight line in the second direction Y. The straight portion is used to be connected to the manifold 24.

Further, the bent portion is connected to both the straight portion and the heat exchange body through circular arc bending. Specifically, a bending radius at a connection position between the bent portion and the straight portion is greater than or equal to a thickness of the heat exchange tube 23 in the first direction Z. A bending radius at a connection position between the bent portion and the heat exchange body is greater than or equal to the thickness of the heat exchange tube 23 in the first direction Z. For example, when the thickness of the heat exchange tube 23 in the first direction Z is 6 mm, the bending radius at the connection position between the bent portion and the straight portion is greater than or equal to 6 mm, and the bending radius at the connection position between the bent portion and the heat exchange body is greater than or equal to 6 mm.

In a specific example, the inlet end of the heat exchange tube 23 is inserted into the first port and welded to the manifold 24, and the outlet end of the heat exchange tube 23 is inserted into the second port and welded to the manifold 24.

A length of the straight portion of either the inlet end or the outlet end of the heat exchange tube 23 in the second direction Y is greater than or equal to 1 mm. For example, the length of the straight portion of either the inlet end or the outlet end of the heat exchange tube 23 in the second direction Y may be 1 mm, 2 mm, 4 mm, 6 mm, 8 mm, 10 mm, 12 mm, 14 mm, 16 mm, or 20 mm.

Further, the length of the straight portion of either the inlet end or the outlet end of the heat exchange tube 23 in the second direction Y is greater than or equal to 3 mm and less than or equal to 5 mm. For example, the length of the straight portion of either the inlet end or the outlet end of the heat exchange tube 23 is 3 mm, 3.5 mm, 4 mm, 4.5 mm, or 5 mm.

Thus, a sufficient welding length may be provided between the straight portion and the manifold 24, improving the welding quality of the welding between the straight portion and the manifold 24.

In addition, the heat exchange member 20 includes a plurality of heat exchange tubes 23, the plurality of heat exchange tubes 23 are spaced apart along the third direction X, and the manifold 24 extends along the third direction X; the flow distributing chamber 2402 and the flow collecting chamber 2401 of the manifold 24 are arranged along the first direction Z; and under this condition, the flow distributing chamber 2402 and the flow collecting chamber 2401 also both extend along the third direction X. In this way, in the third direction X, both the flow distributing chamber 2402 and the flow collecting chamber 2401 may extend to positions of the inlet ends and outlet ends of the plurality of heat exchange tubes 23 to facilitate direct connection of the plurality of heat exchange tubes 23 to the flow distributing chamber 2402 and the flow collecting chamber 2401. This can simplify a connection structure between the heat exchange tube 23 and the manifold 24, and reduce the number of bends of the heat exchange tubes 23 for the connection to the manifold 24.

In the above technical solution, the flow collecting chamber 2401 and the flow distributing chamber 2402 of the manifold 24 are spaced apart along the first direction Z, which can facilitate alignment of the flow collecting chamber 2401 and the flow distributing chamber 2402 with the inlet ends and outlet ends of the plurality of heat exchange tubes 23 in the second direction Y, and facilitate direct connection of the plurality of heat exchange tubes 23 to the flow distributing chamber 2402 and the flow collecting chamber 2401. Since the inlet end and the outlet end of the heat exchange tube 23 are respectively bent toward the two sides in the first direction Z and then connected to the manifold 24, the inlet end and the outlet end of the heat exchange tube 23 may be in smooth insertion connection with the flow distributing chamber 2402 and the flow collecting chamber 2401 of the manifold 24, realizing optimization and compactness of the connection structure between the heat exchange tube 23 and the manifold 24.

In some embodiments, the manifold 24 may further be provided with a heat insulation chamber 2405, and the heat insulation chamber 2405 is arranged between the flow distributing chamber 2402 and the flow collecting chamber 2401.

The heat insulation chamber 2405 may separate the flow distributing chamber 2402 from the flow collecting chamber 2401 to reduce heat transfer between a fluid in the flow distributing chamber 2402 and a fluid in the flow collecting chamber 2401, thereby improving the heat exchange performance of the heat exchange member 20.

In the above technical solution, by forming the heat insulation chamber 2405 in the manifold 24, the heat insulation chamber 2405 can be used to isolate the flow collecting chamber 2401 from the flow distributing chamber 2402, so that the fluid in the flow collecting chamber 2401 and the fluid in the flow distributing chamber 2402 are thermally insulated by the air in the heat insulation chamber 2405, thereby improving the heat exchange performance of the heat exchange member 20.

In some embodiments, the manifold 24 may include a manifold body 241 and a partition plate 243. The manifold body 241 is tubular. The partition plate 243 is arranged in the manifold body 241 and extends along a length direction of the manifold body 241 to partition the manifold body 241 into the flow distributing chamber 2402 and the flow collecting chamber 2401, where the heat insulation chamber 2405 is formed in the partition plate 243; or, the partition plate 243 is provided in plurality, the plurality of partition plates 243 are spaced apart along the thickness direction of the heat exchange plate 21, and the heat insulation chamber 2405 is defined between two adjacent partition plates 243.

The manifold body 241 may be in a tubular shape with a rectangular cross section. The partition plate 243 is arranged in the manifold body 241, and the partition plate 243 extends from one end to the other end in the length direction of the manifold body 241 and is flush with both the two ends of the manifold body 241. Two sides of the partition plate 243 in a width direction are respectively connected to two opposite side walls of the manifold body 241.

The number of the partition plates 243 may be one, two, three, four or more. When the partition plate 243 is provided in plurality, the plurality of partition plates 243 may be spaced apart along the first direction. For example, there may be two partition plates 243, and the two partition plates 243 are parallel and spaced apart. The two partition plates 243 fit with the manifold body 241 to define the heat insulation chamber 2405 located between the two partition plates 243, as well as a flow distributing chamber 2402 and a flow collecting chamber 2401 located on two sides of the two partition plates 243 facing away from the heat insulation chamber 2405.

In addition, when there is one partition plate 243, the flow distributing chamber 2402 and the flow collecting chamber 2401 are formed on two sides of the partition plate 243 respectively. The partition plate 243 may be formed as a hollow plate structure to define the heat insulation chamber 2405. The heat insulation chamber 2405 may extend through two ends of the partition plate 243 along a length direction of the partition plate 243, to facilitate the formation of the heat insulation chamber 2405.

The partition plate 243 and the manifold body 241 may be separate parts. The partition plate 243 and the manifold body 241 may be hermetically connected by welding or other connection methods. Certainly, the partition plate 243 and the manifold body 241 may be an integral part, that is, the partition plate 243 and the manifold body 241 may be integrally formed. For example, the partition plate 243 and the manifold body 241 may be an integrally formed extruded part. In this way, processing is facilitated, and good sealing performance is achieved.

In the above technical solution, the manifold 24 includes the manifold body 241 and the partition plate 243, the partition plate 243 is used for partitioning to form the flow distributing chamber 2402 and the flow collecting chamber 2401, and the heat insulation chamber 2405 is formed on the partition plate 243; or the partition plate 243 is further used for partitioning to form the heat insulation chamber 2405 located between the flow distributing chamber 2402 and the flow collecting chamber 2401, which can simplify the structure of the manifold 24 and facilitate the processing and manufacturing on the premise of improving the heat insulation performance between the flow distributing chamber 2402 and the flow collecting chamber 2401.

In some embodiments of this application, the manifold 24 may include a manifold body 241 and an end cover 242. Two ends of the manifold body 241 in the third direction X are open. A partition plate 243 is arranged in the manifold body 241. The partition plate 243 extends along the length direction (that is, the third direction X) of the manifold body 241 and divides space in the manifold body 241 into a flow distributing chamber 2402 and a flow collecting chamber 2401. There may be two end covers 242, and the two end covers 242 respectively cover the two open ends of the manifold body 241.

Further, a cross section of the manifold body 241 is rectangular. This can facilitate the extrusion forming of the manifold body 241 and enhance the structural strength of the manifold body 241.

In some other embodiments, the manifold 24 may include a first flow collecting member and a second flow collecting member. The first flow collecting member and the second flow collecting member are two independent components. The first flow collecting member and the second flow collecting member are arranged along the first direction Z, or the first flow collecting member and the second flow collecting member are arranged along the second direction Y, where a flow collecting chamber 2401 is defined in the first flow collecting member, and a flow distributing chamber 2402 is defined in the second flow collecting member.

In the above technical solution, the manifold 24 includes the manifold body 241 and the end cover 242, which can simplify the structure of the manifold 24 and facilitate the processing and forming of the manifold 24.

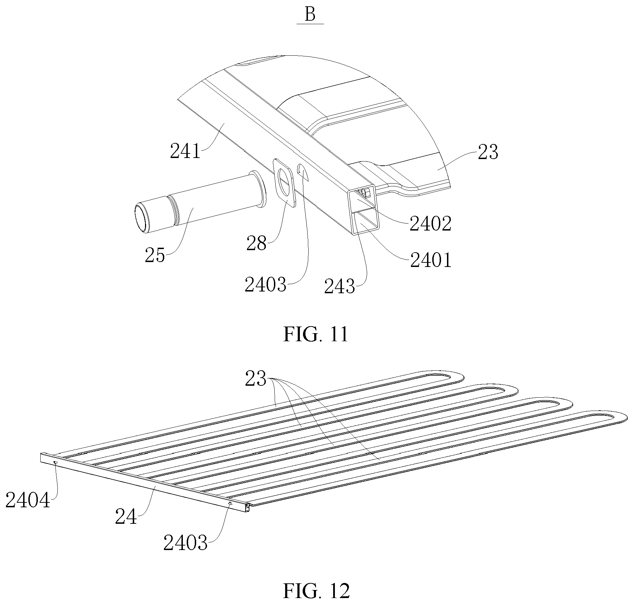

Specific structures of the manifold 24, a liquid inlet joint 25, and a liquid outlet joint 26 of the heat exchange member 20 are described below with reference to FIG. 10 to FIG. 12. FIG. 10 is a schematic diagram of a heat exchange tube 23 and a manifold 24 of a heat exchange member 20 from another perspective according to an embodiment of this application; FIG. 11 is an enlarged view of a circled portion B in FIG. 10; and FIG. 12 is a schematic diagram of a heat exchange tube 23 and a manifold 24 of a heat exchange member 20 from still another angle according to an embodiment of this application.

In some embodiments of this application, the heat exchange member 20 may further include: a liquid inlet joint 25 and a liquid outlet joint 26. The manifold 24 is provided with a liquid inlet port 2403 in communication with the flow distributing chamber 2402 and a liquid outlet port 2404 in communication with the flow collecting chamber 2401. Both the liquid inlet port 2403 and the liquid outlet port 2404 are formed on a side of the manifold 24 facing away from the heat exchange tube 23. The liquid inlet joint 25 is connected to a position of the liquid inlet port 2403, and the liquid outlet joint 26 is connected to a position of the liquid outlet port 2404.

For example, the manifold 24 extends along the third direction X and has a rectangular cross section with a central partition. The heat exchange tube 23 is arranged on one side of the manifold 24 in the second direction Y. The liquid inlet port 2403 and the liquid outlet port 2404 are arranged on the other side of the manifold 24 in the second direction Y. The liquid inlet joint 25 extends away from the manifold 24 along the second direction Y and is connected to a periphery of the liquid inlet port 2403. The liquid outlet joint 26 extends away from the manifold 24 along the second direction Y and is connected to a periphery of the liquid outlet port 2404. The liquid inlet joint 25 is used to be connected to an external liquid inlet pipeline of a thermal management system of a battery 1000, and the liquid outlet joint 26 is used to be connected to an external liquid outlet pipeline.

The liquid inlet port 2403 and the liquid outlet port 2404 are both arranged on the side of the manifold 24 facing away from the heat exchange tube 23. On the one hand, this can facilitate the installation and connection of the liquid inlet joint 25 and the liquid outlet joint 26 and prevent the liquid inlet joint 25 and the liquid outlet joint 26 from interfering with the heat exchange tube 23. On the other hand, the liquid inlet port 2403 and the liquid outlet port 2404 are arranged on a same side of the manifold 24, which can facilitate connection of external pipelines on a same side of the manifold 24, and regulate the routing of external pipelines, thereby achieving a compact structure.

The liquid inlet port 2403 may be circular, elliptical, or polygonal, or may be semicircular. The liquid outlet port 2404 may also be circular, elliptical, or polygonal, or may be semicircular.

The liquid inlet joint 25 and the periphery of the liquid inlet port 2403 may be fixedly connected by welding, snap fitting, threaded connection, or fastening. The liquid outlet joint 26 and the periphery of the liquid outlet port 2404 may also be fixedly connected by welding, snap fitting, threaded connection, or fastening.

In the above technical solution, both the liquid inlet joint 25 and the liquid outlet joint 26 are connected to the side of the manifold 24 facing away from the heat exchange tube 23, which can facilitate connection of external liquid inlet pipelines and external liquid outlet pipelines on a same side of the manifold 24, and regulate the routing of external pipelines, thereby achieving a compact structure.

In some embodiments of this application, at least one of the liquid inlet joint 25 and the liquid outlet joint 26 is welded to the manifold 24 through a welding gasket 28.

That is, only the liquid inlet joint 25 can be welded to the manifold 24 through the welding gasket 28, or only the liquid outlet joint 26 can be welded to the manifold 24 through the welding gasket 28, or both the liquid inlet joint 25 and the liquid outlet joint 26 can be welded to the manifold 24 through the welding gasket 28.

The welding gasket 28 includes a gasket body and solder layers. The solder layers are arranged on two sides of the gasket body in a thickness direction (for example, the second direction Y). In a specific example, the manifold 24, the liquid inlet joint 25, and the liquid outlet joint 26 are all aluminum parts. The gasket body of the welding gasket 28 is made of 3000-series aluminum, and the solder layers are made of 4000-series aluminum. Since a melting point of 4000-series aluminum is lower than that of 3000-series aluminum, when the welding gasket 28 is used to weld the manifold 24 to the liquid inlet joint 25 and the liquid outlet joint 26, the 4000-series aluminum used as the solder layer melts, so that the liquid inlet joint 25 or the liquid outlet joint 26 is connected to the gasket body through the solder layer, and the manifold 24 is connected to the gasket body through the solder layer.

In the above technical solution, the use of the welding gasket 28 for welding the manifold 24 to the liquid inlet joint 25 and the liquid outlet joint 26 can facilitate the welding of the manifold 24 to the liquid inlet joint 25 and the liquid outlet joint 26 and improve the welding quality.

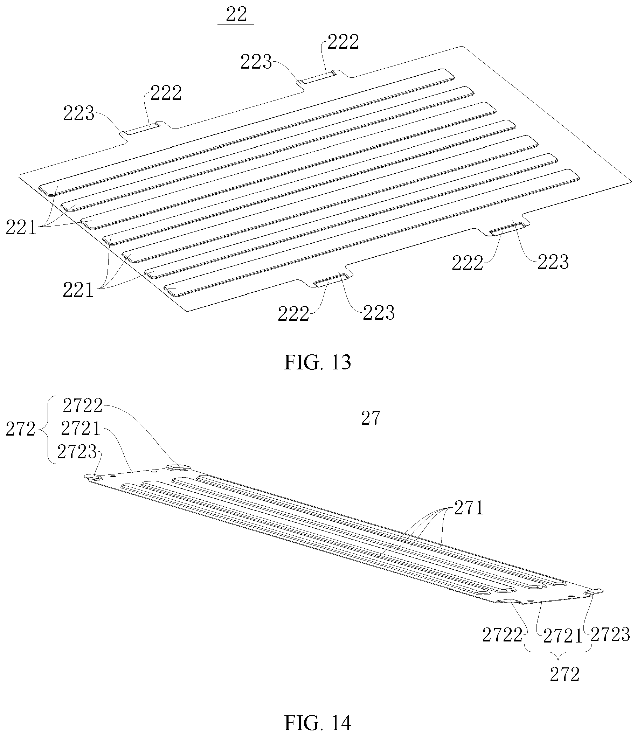

A specific structure of the bracket 27 of the heat exchange member 20 is described below with reference to FIG. 13 and FIG. 14. FIG. 13 is a schematic diagram of a back plate 22 of a heat exchange member 20 according to an embodiment of this application; and FIG. 14 is a schematic diagram of a bracket 27 of a heat exchange member 20 according to an embodiment of this application.

In some embodiments of this application, the heat exchange member 20 may further include: a bracket 27, and the bracket 27 is arranged on a side of the back plate 22 facing away from the heat exchange tube 23 and fixedly connected to the back plate 22.

That is, the heat exchange tube 23 and the bracket 27 are respectively arranged on two sides of the back plate 22 in the first direction Z. The bracket 27 and the back plate 22 may be welded, snap-fitted, adhered, or connected by fasteners to realize fixed connection therebetween.

The bracket 27 is connected to the back plate 22, which can enhance the structural strength of the back plate 22, thereby enhancing the overall strength of the heat exchange member 20. In addition, the bracket 27 is arranged on the side of the back plate 22 facing away from the heat exchange tube 23, which can prevent the bracket 27 from interfering with the heat exchange tube 23, thereby reducing the influence of the bracket 27 on the heat exchange tube 23.

It should be noted that the bracket 27 plays a role in enhancing the structural strength of the back plate 22. When the heat exchange member 20 is used as the second part of the box 100, the bracket 27 can also serve as a connection structure between the box 100 and an external structure, facilitating fixed connection between the box 100 and the external structure and facilitating fixation of the battery 1000, without affecting the heat exchange effect of the heat exchange member 20.

In the above technical solution, by arranging the bracket 27 on the side of the back plate 22 facing away from the heat exchange tube 23, the bracket 27 can not only enhance the structural strength of the back plate 22 and enhance the overall strength of the heat exchange member 20, but also serve as the connection structure between the box 100 and an external structure, thereby facilitating fixed connection between the box 100 and the external structure and facilitating fixation of the battery 1000.

In some embodiments of this application, there is at least one bracket 27. When the bracket 27 is provided in plurality; the plurality of brackets 27 extend along the third direction X and are spaced apart in the second direction Y; and the first direction Z, the second direction Y, and the third direction X intersect with each other.

For example, the number of the brackets 27 may be one, two, three, four, five, or more. It should be noted that the number of the brackets 27 may be specifically set according to the requirements on the structural strength of the heat exchange member 20 and the requirements on a connection position between the battery 1000 and the outside, thereby improving the applicability of the heat exchange member 20.

In a specific example, the straight tube segment 231 of the heat exchange tube 23 extends along the second direction Y. The back plate 22 is provided with a reinforcing rib 221. The reinforcing rib 221 extends along the second direction Y. The brackets 27 are fixed to the back plate 22. The brackets 27 extend along the third direction X and are spaced apart in the second direction Y. Under this condition, for the overall heat exchange member 20, the reinforcing rib 221 on the back plate 22 can play a role in strengthening the structure in the second direction Y, and the brackets 27 can play a role in strengthening the structure in the third direction X, thereby further increasing the rigidity of the heat exchange member 20.

In the above technical solution, the bracket 27 is provided in plurality; the plurality of brackets 27 extend along the third direction X and are spaced apart in the second direction Y, which can further enhance the structural strength of the heat exchange member 20, and further facilitate the fixed connection of the battery 1000 to an external structure.

In some embodiments of this application, the bracket 27 is in a plate shape, and a reinforcing convex rib 271 is formed on the bracket 27.

Specifically, the bracket 27 is in a plate shape arranged perpendicular to the first direction Z. A length direction of the bracket 27 is along the third direction X, and a width direction of the bracket 27 is along the second direction Y. This can simplify the structure of the bracket 27 and reduce the processing and manufacturing costs of the bracket 27.

In an example, the reinforcing convex rib 271 may be in an emboss shape; and the reinforcing convex rib 271 may alternatively extend along a specific direction to form a long strip shape, for example, the reinforcing convex rib 271 may extend along a straight line and/or a curve. Certainly, the reinforcing convex rib 271 may alternatively be annular, for example, the reinforcing convex rib 271 may extend to form a circular ring shape, a rectangular ring shape, or the like. When the reinforcing convex rib 271 is provided in plurality, the plurality of reinforcing convex ribs 271 may be arranged in an array. Certainly, positions of the plurality of reinforcing convex ribs 271 may alternatively be specifically set according to requirements.

Further, the reinforcing convex rib 271 may be a convex rib additionally arranged on a surface of the bracket 27. The reinforcing convex rib 271 may alternatively be formed by protruding of a part of the plate body of the bracket 27. For example, the reinforcing convex rib 271 may be formed by direct stamping on the bracket 27, thereby reducing the weight and cost.

In the above technical solution, by arranging the reinforcing convex rib 271 on the bracket 27, the structural strength of the bracket 27 can be enhanced, and thus the overall structural strength of the heat exchange member 20 can be further enhanced.

In some embodiments of this application, a plurality of reinforcing convex ribs 271 are formed on the bracket 27, and the plurality of reinforcing convex ribs 271 extend along the third direction X and are spaced apart in the second direction Y.

For example, the number of the reinforcing convex ribs 271 may be two, three, four, five, eight, ten, fifteen, twenty, or the like. The reinforcing convex rib 271 may extend along a straight line or along a curve in the third direction X. Spacings between the plurality of reinforcing convex ribs 271 in the second direction Y may be equal or not equal, and the spacing between two adjacent reinforcing convex ribs 271 may be always the same or gradually changes. For example, in a specific example, the plurality of reinforcing convex ribs 271 extend along a straight line in the third direction X, and the plurality of reinforcing convex ribs 271 are evenly spaced apart in the second direction Y.

In the above technical solution, by arranging the plurality of reinforcing convex ribs 271 extending along the third direction X on the bracket 27, the structural strength of the bracket 27 can be enhanced by the reinforcing convex ribs 271, thereby enhancing the structural strength of the heat exchange member 20 along the third direction X and improving the reliability of the heat exchange member 20.

In some embodiments of this application, the back plate 22 is provided with a first positioning portion 222, the bracket 27 is provided with a second positioning portion 272, and the first positioning portion 222 and the second positioning portion 272 are in positioning fit.

The first positioning portion 222 may be a structure such as a positioning groove 2721, a positioning hole, a positioning post, or a positioning convex rib. The second positioning portion 272 is a structure such as a positioning post, a positioning convex rib, a positioning groove 2721, or a positioning hole adapted to the first positioning portion 222.

In the above technical solution, by respectively arranging the first positioning portion 222 and the second positioning portion 272 on the back plate 22 and the bracket 27, the bracket 27 can be positioned on the back plate 22 through the first positioning portion 222 and the second positioning portion 272, thereby facilitating subsequent fixed connection (such as welding or fastening) between the back plate 22 and the bracket 27, and improving the assembly efficiency.

In some embodiments of this application, one of the first positioning portion 222 and the second positioning portion 272 is provided with a positioning boss and the other is provided with a positioning groove 2721, and the positioning boss fits with the interior of the positioning groove 2721.

For example, the back plate 22 is provided with a positioning boss, and the bracket 27 is provided with a positioning groove 2721. For another example, the back plate 22 is provided with a positioning groove 2721, and the bracket 27 is provided with a positioning boss, where the positioning boss is adapted to the positioning groove 2721 in shape, and the positioning boss fits with the interior of the positioning groove 2721. For still another example, the back plate 22 may be provided with a first positioning boss and a first positioning groove 2721, and the bracket 27 may be provided with a second positioning boss and a second positioning groove 2721, where the first positioning boss fits with the interior of the second positioning groove 2721, and the second positioning boss fits with the interior of the first positioning groove 2721.

There may be one or more positioning bosses. There may be one or more positioning grooves 2721, which are in one-to-one correspondence with the positioning bosses.

In the above technical solution, forming the first positioning portion 222 and the second positioning portion 272 as a positioning boss and a positioning groove 2721 respectively can simplify a positioning structure for the back plate 22 and the bracket 27, facilitate the processing and manufacturing, and reduce the production difficulty.

In some embodiments of this application, the first positioning portion 222 is formed as a positioning boss protruding toward the bracket 27. The second positioning portion 272 includes a first protrusion 2722 and a second protrusion 2723 protruding toward the back plate 22. The first protrusion 2722 and the second protrusion 2723 are spaced apart and fit with each other to define the positioning groove 2721.

Further, the positioning boss may be formed by stamping on the back plate 22, and the first protrusion 2722 and the second protrusion 2723 may be formed by stamping on the bracket 27. This facilitates the processing and improves the production efficiency.

For example, two ends of the bracket 27 in the third direction X are each provided with the second positioning portion 272. The second positioning portions 272 each include a first protrusion 2722 and a second protrusion 2723. The first protrusion 2722 and the second protrusion 2723 are respectively formed as two side edges of the bracket 27 in the second direction Y. Further, the bracket 27 is in a rectangular plate shape, and four corners of the bracket 27 all protrude toward the back plate 22 to form the first protrusions 2722 and the second protrusions 2723 of the two second positioning portions 272.

During assembly, the positioning boss on the back plate 22 fits with the interior of the positioning groove 2721 and is attached to a bottom wall of the positioning groove 2721. The first protrusion 2722 and the second protrusion 2723 are attached to a side surface of the back plate 22 facing the bracket 27, and the positioning boss is sandwiched between the first protrusion 2722 and the second protrusion 2723.

In the above technical solution, the second positioning portion 272 includes the first protrusion 2722 and the second protrusion 2723 that are spaced apart, and the first protrusion 2722 and the second protrusion 2723 fit with each other to define the positioning groove 2721. This can simplify a forming structure of the positioning groove 2721, facilitate the processing, facilitate positioning fit between the bracket 27 and the back plate 22, and facilitate the assembly.

In some embodiments of this application, two side edges of the back plate 22 in the third direction X are provided with outwardly protruding lugs 223. The first positioning portion 222 is formed on the lug 223. The bracket 27 extends along the third direction X, and the second positioning portions 272 are formed at two ends of the bracket 27 in the third direction X.

For example, the heat exchange member 20 may include four brackets 27. The four brackets 27 extend along the third direction X and are spaced apart in the second direction Y. Two side edges of the back plate 22 in the third direction X are each provided with four lugs 223 that are spaced apart. The lug 223 is in a plate shape coplanar with a main body portion of the back plate 22, and an outer contour of the lug 223 is rectangular. In the third direction X, two ends of each bracket 27 respectively extend to positions of two oppositely arranged lugs 223 of the back plate 22 and are in positioning fit with the first positioning portions 222 on the lugs 223.

At least a part of the lug 223 exceeds the periphery of the heat exchange plate 21. In this way, the first positioning portion 222 may be arranged on a peripheral side of the heat exchange plate 21 and the heat exchange tube 23. Thus, the first positioning portion 222 does not interfere with a connection structure for the heat exchange tube 23 or the back plate 22 and the heat exchange plate 21. In addition, the bracket 27 can also play a role in structurally strengthening the lug 223. The lug 223 and the two ends of the bracket 27 can jointly constitute a connection structure between the box 100 and an external structure, facilitating fixation of the battery 1000.

Further, the two ends of the bracket 27 are each provided with a first connection hole, and the lug 223 is provided with a second connection hole. The first connection hole and the second connection hole are opposite and in communication with each other in the first direction Z. The heat exchange member 20 may be fixedly connected to an external structure of the box 100 by fasteners passing through the first connection hole and the second connection hole, realizing the installation and fixation of the battery 1000.

Further, each lug 223 may be provided with a plurality of second connection holes, and the first connection holes are in one-to-one correspondence with the second connection holes. More further, the second connection hole extends through the positioning boss along the first direction Z. In other words, the second connection hole is formed on the positioning boss, and the first connection hole is formed in the positioning groove 2721.

In the above technical solution, the two side edges of the back plate 22 in the third direction X are provided with the outwardly protruding lugs 223, and the first positioning portion 222 is formed on the lug 223. In this way, the first positioning portion 222 may be arranged on the peripheral side of the heat exchange plate 21 and the heat exchange tube 23, so that the first positioning portion 222 does not interfere with a connection structure for the heat exchange tube 23 or back plate 22 and the heat exchange plate 21. In addition, the bracket 27 can also play a role in structurally strengthening the lug 223. The lug 223 and the two ends of the bracket 27 can jointly constitute a connection structure between the box 100 and an external structure, facilitating fixation of the battery 1000.

According to a second aspect, an embodiment of this application further provides a box 100, including: a first part 10 and a second part, where the first part 10 is provided with an accommodating cavity 101 open on one side; the second part covers the open side of the accommodating cavity 101; and the second part is the heat exchange member 20 according to any one of the above embodiments.

In the above technical solution, since the second part of the box 100 is the above heat exchange member 20, and the heat exchange member 20 includes the heat exchange plate 21, the heat exchange tube 23, and the back plate 22 arranged sequentially from inside to outside, the heat exchange member 20 can replace a part of the box 100, reduce the number of parts of the battery 1000, and reduce the cost. In addition, the structure of the heat exchange member 20 in which the heat exchange tube 23 is connected to the heat exchange plate 21 has a large thermal conductivity coefficient and a good thermal conduction effect, which can improve the heat exchange efficiency between the heat exchange member 20 and the battery cell 300. Moreover, the heat exchange member 20 includes the heat exchange tube 23. Compared with a stamped flow channel plate, the heat exchange tube 23 has uniform flow, small pressure drop, and light weight, which can increase the energy density of the battery 1000.

According to a third aspect, an embodiment of this application further provides a battery 1000, including the box 100 according to any one of the above embodiments and a plurality of battery cells 300, where the plurality of battery cells 300 are arranged in the accommodating cavity 101.

The plurality of battery cells 300 can constitute a plurality of battery 1000 groups. Each battery 1000 group includes a plurality of battery cells 300 stacked along the second direction Y. The plurality of battery 1000 groups are stacked along the third direction X. The plurality of battery cells 300 are all fixedly connected to the heat exchange plate 21 of the heat exchange member 20.

In the above technical solution, since the battery 1000 is provided with the above box 100, and the second part of the box 100 is the heat exchange member 20, the heat exchange efficiency between the heat exchange member 20 and the battery cell 300 can be improved, and compared with a stamped flow channel plate, the heat exchange tube 23 has uniform flow, small pressure drop, and light weight, which can increase the energy density of the battery 1000.

According to a fourth aspect, an embodiment of this application further provides an electric device 1, including the battery 1000 according to any one of the above embodiments.

In the above technical solution, since the electric device 1 is provided with the above battery 1000, the overall performance of the electric device 1 is improved.

A battery 1000 according to a specific embodiment of this application is described below with reference to FIG. 2 to FIG. 14.

Referring to FIG. 2 and FIG. 3, the battery 1000 includes a box 100 and a plurality of battery cells 300. The box 100 includes a first part 10 and a heat exchange member 20. The first part 10 defines an accommodating cavity 101 open on one side in the first direction Z. The heat exchange member 20 covers the open side of the accommodating cavity 101. For example, the first direction Z is an up-down direction. The first part 10 has an accommodating cavity 101 open on a lower side. The heat exchange member 20 is arranged at a bottom of the first part 10 and covers the accommodating cavity 101. The plurality of battery cells 300 are arranged in the accommodating cavity 101 and are supported and fixed on an upper side surface of the heat exchange member 20.

As shown in FIG. 5 and FIG. 6, the heat exchange member 20 includes a heat exchange plate 21, a heat exchange tube 23, a back plate 22, a bracket 27, a manifold 24, a liquid inlet joint 25, and a liquid outlet joint 26, where the heat exchange plate 21, the heat exchange tube 23, the back plate 22, and the bracket 27 are arranged sequentially from top to bottom.

The heat exchange plate 21 is provided with a downwardly recessed anti-overflow groove 211 by stamping. A periphery of the heat exchange plate 21 is formed as a flange 212. The plurality of battery cells 300 are arranged in the anti-overflow groove 211 and are adhered to the heat exchange plate 21. There are four heat exchange tubes 23. The four heat exchange tubes 23 are spaced apart along the third direction X. Each heat exchange tube 23 is bent into a U shape that is open toward a side in the second direction Y.

The manifold 24 is arranged on the open side of the heat exchange tube 23 in the second direction Y. Two ends of each heat exchange tube 23 are both connected to the manifold 24 to communicate with the flow distributing chamber 2402 and the flow collecting chamber 2401 in the manifold 24 respectively. The liquid inlet joint 25 and the liquid outlet joint 26 are both arranged on a side of the manifold 24 facing away from the heat exchange tube 23 and are respectively connected to the liquid inlet port and the liquid outlet port on the manifold 24.

The back plate 22 is provided with seven upwardly protruding reinforcing ribs 221 by stamping. The seven reinforcing ribs 221 extend along the second direction Y and are spaced apart in the third direction X. The heat exchange tube 23 is arranged between the back plate 22 and the heat exchange plate 21. The four heat exchange tubes 23 include eight straight tube segments 231 extending along the second direction Y. One reinforcing rib 221 is arranged between every two adjacent straight tube segments 231. Two side edges of the back plate 22 in the third direction X are each provided with a lug 223 protruding along the third direction X. Each lug 223 is provided with a downwardly protruding positioning boss by stamping. Each positioning boss is provided with a plurality of second connection holes.

There are two brackets 27. The two brackets 27 extend along the third direction X and are spaced apart in the second direction Y. Each bracket 27 is provided with a plurality of reinforcing convex ribs 271 by stamping. The reinforcing convex ribs 271 extend along the third direction X and are spaced apart in the second direction Y. Two ends of the bracket 27 in the second direction Y are each provided with an upwardly protruding first protrusion 2722 and an upwardly protruding second protrusion 2723 by stamping. The first protrusion 2722 and the second protrusion 2723 fit with each other to define a positioning groove 2721. A plurality of first connection holes are formed in the positioning groove 2721. The first connection holes are aligned with the second connection holes up and down.

The heat exchange plate 21, the heat exchange tube 23, the manifold 24, the liquid inlet joint 25, the liquid outlet joint 26, the back plate 22, and the bracket 27 are all aluminum parts. The heat exchange plate 21 is welded to the heat exchange tube 23. The reinforcing rib 221 of the back plate 22 is welded to the heat exchange plate 21. The heat exchange tube 23 is welded to the manifold 24. The liquid inlet joint 25 and the liquid outlet joint 26 are welded to the manifold 24 through a welding gasket 28. The bracket 27 is welded to the back plate 22.

In the above technical solution, the heat of the fluid in the heat exchange tube 23 can be transferred to the battery cell 300 through the heat exchange tube 23 and the heat exchange plate 21 that are directly welded. Thus, the heat exchange member 20 has high heat transfer efficiency, achieves thermal management performance that can reach the performance of a stamped plate, and has a small pressure drop. In addition, the structural strength of the heat exchange member 20 is higher.

In conclusion, it should be noted that the above embodiments are only used to illustrate the technical solutions of this application and are not intended to limit them. Although this application has been described in detail with reference to the foregoing embodiments, those of ordinary skill in the art should understand that they can still modify the technical solutions recorded in the foregoing embodiments or equivalently replace some or all of the technical features therein. However, these modifications or replacements do not cause the essence of the corresponding technical solutions to depart from the scope of the technical solutions of the embodiments of this application, and they should all be covered by the scope of the claims and the specification of this application. In particular, as long as there is no structural conflict, the technical features mentioned in the embodiments can be combined in any manner. This application is not limited to the specific embodiments disclosed herein, but includes all technical solutions falling within the scope of the claims.

## Claims

1. A heat exchange member (20) for a box (100) of a battery (1000), comprising:
a heat exchange plate (21);
a back plate (22), wherein the back plate (22) is arranged on a side of the heat exchange plate (21) in a first direction (Z) and connected to the heat exchange plate (21), and the first direction (Z) is a thickness direction of the heat exchange plate (21);
a heat exchange tube (23), wherein the heat exchange tube (23) is arranged between the heat exchange plate (21) and the back plate (22) and fixedly connected to the heat exchange plate (21) and/or the back plate (22).

2. The heat exchange member (20) according to claim 1, wherein a side surface of the heat exchange plate (21) facing away from the heat exchange tube (23) is provided with an anti-overflow groove (211), and a bottom wall and/or side wall of the anti-overflow groove (211) is suitable for being adhered to a plurality of battery (1000) cells.

3. The heat exchange member (20) according to claim 2, wherein the anti-overflow groove (211) is formed by recessing a part of the heat exchange plate (21) toward the back plate (22) along the first direction (Z).

4. The heat exchange member (20) according to claim 2 or 3, wherein a periphery of the heat exchange plate (21) is provided with a flange (212) extending outward away from a center of the heat exchange plate (21), and the flange (212) extends annularly along a circumferential direction of the anti-overflow groove (211).

5. The heat exchange member (20) according to claim 4, wherein a depth of the anti-overflow groove (211) is greater than or equal to 7 mm, and/or a width of the flange (212) is greater than or equal to 10 mm.

6. The heat exchange member (20) according to any one of claims 1 to 5, wherein one of the back plate (22) and the heat exchange plate (21) is provided with a reinforcing rib (221) protruding toward the heat exchange tube (23), and the reinforcing rib (221) is fixedly connected to the other of the back plate (22) and the heat exchange plate (21).

7. The heat exchange member (20) according to claim 6, wherein the reinforcing rib (221) is provided in plurality; the plurality of reinforcing ribs (221) extend along a second direction (Y) and are spaced apart in a third direction (X); at least a part of the heat exchange tube (23) is arranged between adjacent two of the reinforcing ribs (221); and the first direction (Z), the second direction (Y), and the third direction (X) intersect with each other.

8. The heat exchange member (20) according to claim 7, wherein the heat exchange tube (23) comprises a plurality of straight tube segments (231), the plurality of straight tube segments (231) extend along the second direction (Y) and are spaced apart in the third direction (X), and the plurality of straight tube segments (231) and the plurality of reinforcing ribs (221) are alternately arranged in the third direction (X).

9. The heat exchange member (20) according to any one of claims 1 to 8, wherein a periphery of the heat exchange plate (21) is fixedly connected to a periphery of the back plate (22).

10. The heat exchange member (20) according to any one of claims 1 to 9, wherein the heat exchange tube (23) is provided in plurality, the plurality of heat exchange tubes (23) are spaced apart along a third direction (X), and the third direction (X) intersects with the first direction (Z).

11. The heat exchange member (20) according to any one of claims 1 to 10, wherein the heat exchange tube (23) comprises a plurality of straight tube segments (231) and at least one bent segment (232); the plurality of straight tube segments (231) all extend along a second direction (Y) and are spaced apart in a third direction (X); the plurality of straight tube segments (231) are sequentially connected through the bent segment (232); and the first direction (Z), the second direction (Y), and the third direction (X) intersect with each other.

12. The heat exchange member (20) according to any one of claims 1 to 11, wherein the heat exchange tube (23) is welded or adhered to the heat exchange plate (21), and the heat exchange plate (21) is welded to the back plate (22).

13. The heat exchange member (20) according to any one of claims 1 to 12, wherein the heat exchange member (20) further comprises: a manifold (24); the manifold (24) has a flow collecting chamber (2401) and a flow distributing chamber (2402); an inlet of the heat exchange tube (23) is in communication with the flow distributing chamber (2402); and an outlet is in communication with the flow collecting chamber (2401).

14. The heat exchange member (20) according to claim 13, wherein the flow collecting chamber (2401) and the flow distributing chamber (2402) are arranged along a thickness direction of the heat exchange plate (21); and
an inlet end of the heat exchange tube (23) is bent toward one side in the thickness direction of the heat exchange plate (21) and then connected to the manifold (24), and an outlet end of the heat exchange tube (23) is bent toward the other side in the thickness direction of the heat exchange plate (21) and then connected to the manifold (24).

15. The heat exchange member (20) according to claim 13 or 14, wherein the manifold (24) is further provided with a heat insulation chamber, and the heat insulation chamber (2405) is arranged between the flow distributing chamber (2402) and the flow collecting chamber (2401).

16. The heat exchange member (20) according to claim 15, wherein the manifold (24) comprises a manifold body (241) and a partition plate (243); the manifold body (241) is tubular; and the partition plate (243) is arranged in the manifold body (241) and extends along a length direction of the manifold body (241) to partition the manifold body (241) into the flow distributing chamber (2402) and the flow collecting chamber (2401);
wherein the heat insulation chamber (2405) is formed in the partition plate (243); or, the partition plate (243) is provided in plurality, the plurality of partition plates (243) are spaced apart along the thickness direction of the heat exchange plate, and the heat insulation chamber (2405) is defined between adjacent two of the partition plates (243).

17. The heat exchange member (20) according to claims 13 to 16, wherein the heat exchange member (20) further comprises: a liquid inlet joint (25) and a liquid outlet joint (26); the manifold (24) is provided with a liquid inlet port (2403) in communication with the flow distributing chamber (2402) and a liquid outlet port (2404) in communication with the flow collecting chamber (2401); both the liquid inlet port (2403) and the liquid outlet port (2404) are formed on a side of the manifold (24) facing away from the heat exchange tube (23); the liquid inlet joint (25) is connected to a position of the liquid inlet port (2403); and the liquid outlet joint (26) is connected to a position of the liquid outlet port (2404).

18. The heat exchange member (20) according to claim 17, wherein at least one of the liquid inlet joint (25) and the liquid outlet joint (26) is welded to the manifold (24) through a welding gasket (28).

19. The heat exchange member (20) according to any one of claims 1 to 18, wherein the heat exchange member (20) further comprises: a bracket (27), and the bracket (27) is arranged on a side of the back plate (22) facing away from the heat exchange tube (23) and fixedly connected to the back plate (22).

20. The heat exchange member (20) according to claim 19, wherein there is at least one bracket (27); and when the bracket (27) is provided in plurality, the plurality of brackets (27) extend along a third direction (X) and are spaced apart in a second direction (Y), and the first direction (Z), the second direction (Y), and the third direction (X) intersect with each other.

21. The heat exchange member (20) according to claim 19 or 20, wherein the bracket (27) is in a plate shape, and a reinforcing convex rib (271) is formed on the bracket (27).

22. The heat exchange member (20) according to claim 21, wherein a plurality of reinforcing convex ribs (271) are formed on the bracket (27), and the plurality of reinforcing convex ribs (271) extend along a third direction (X) and are spaced apart in a second direction (Y).

23. The heat exchange member (20) according to any one of claims 19 to 22, wherein the back plate (22) is provided with a first positioning portion (222), the bracket (27) is provided with a second positioning portion (272), and the first positioning portion (222) and the second positioning portion (272) are in positioning fit.

24. The heat exchange member (20) according to claim 23, wherein one of the first positioning portion (222) and the second positioning portion (272) is provided with a positioning boss and the other is provided with a positioning groove (2721), and the positioning boss fits with the interior of the positioning groove (2721).

25. The heat exchange member (20) according to claim 23 or 24, wherein two side edges of the back plate (22) in a third direction (X) are provided with outwardly protruding lugs (223), the first positioning portion (222) is formed on the lug (223), the bracket (27) extends along the third direction (X), and the second positioning portion (272) is formed at two ends of the bracket (27) in the third direction (X).

26. A box (100), comprising:
a first part (10), wherein the first part (10) is provided with an accommodating cavity (101) open on one side; and
a second part, wherein the second part covers the open side of the accommodating cavity (101), and the second part is the heat exchange member (20) according to any one of claims 1 to 25.

27. A battery (1000), comprising the box (100) according to claim 26 and a plurality of battery cells (300), wherein the plurality of battery cells (300) are arranged in the accommodating cavity (101).

28. An electric device (1), comprising the battery (1000) according to claim 27.
